# EUROPEAN PATENT APPLICATION

(11) **EP 4 637 061 A1**
(43) Date of publication of application: **22.10.2025**
(21) Application number: 23914443.9
(22) Date of filing: 29.11.2023
(51) Int. Cl.: H04L 1/1607

(54) **COMMUNICATION METHOD AND APPARATUS**

(30) Priority: 06.01.2023 CN 202310020619; 08.02.2023 CN 202310123244
(71) Applicant: Huawei Technologies Co., Ltd., Shenzhen, Guangdong 518129 (CN)
(72) Inventor: DOU, Fenghui, Shenzhen, Guangdong 518129 (CN); ZHANG, Yanqing, Shenzhen, Guangdong 518129 (CN)
(74) Representative: Goddar, Heinz J.
(86) International application number: PCT/CN2023/135235
(87) International publication number: WO 2024/146309

(57) **Abstract**

This application provides a communication method and an apparatus, and relates to the field of wireless communication technologies. According to this application, a feedback delay can be reduced, and data transmission efficiency can be improved. The method is applied to a first network device in a first network used for communication between an application server and a terminal device. The method includes: The first network device receives a first policy from a second network device in the first network, where the first policy indicates the first network to notify the application server in a case that the application server fails to transmit data to the terminal device through the first network. Then, the first network device sends a first message to a third network device in the first network, where the first message indicates the third network device to notify the first network device or a fourth network device in the first network in a case that the third network device fails to transmit data to the terminal device, and the first message is generated according to the first policy. The first network is a 3GPP network, and the first network device is a session management network element.

## Description

This application claims priorities to Chinese Patent Application No. 202310020619.8, filed with the China National Intellectual Property Administration on January 6, 2023 and entitled "DATA TRANSMISSION METHOD, TERMINAL DEVICE, NETWORK DEVICE, AND COMMUNICATION SYSTEM", and to Chinese Patent Application No. 202310123244.8, filed with the China National Intellectual Property Administration on February 8, 2023 and entitled "COMMUNICATION METHOD AND APPARATUS", both of which are incorporated herein by reference in their entireties.

### TECHNICAL FIELD

Embodiments of this application relate to the wireless communication field, and in particular, to a communication method and an apparatus.

### BACKGROUND

In a feedback mechanism of a communication system, an application server sends data to a terminal device through a 3rd generation partnership project (3rd generation partnership project, 3GPP) network, and the terminal device feeds back a data receiving status within specific time after receiving the data, so that the application server determines whether to perform application layer (or transport layer) retransmission.

However, there may be data transmission failures in the 3GPP network. Because the feedback of the data receiving status belongs to an application layer (or transport layer) feedback, a feedback delay is high, and data transmission efficiency is low.

### SUMMARY

This application provides a communication method and an apparatus, to reduce a feedback delay and improve data transmission efficiency.

To achieve the foregoing objectives, this application uses the following technical solutions.

According to a first aspect, a communication method is provided. The method may be performed by a first network device in a first network, or may be performed by a chip used in the first network device. The first network is used for communication between an application server and a terminal device. The following uses an example in which the method is performed by the first network device for description. The method includes the following steps.

The first network device receives a first policy from a second network device in the first network, where the first policy indicates the first network to notify the application server in a case that the application server fails to transmit data to the terminal device through the first network.

The first network device sends a first message to a third network device in the first network, where the first message indicates the third network device to notify the first network device or a fourth network device in the first network in a case that the third network device fails to transmit data to the terminal device, and the first message is generated according to the first policy.

For example, the first network device is a session management network element, the second network device is a policy control network element, the third network device is an access network device, and the fourth network device is a user plane network element.

In other words, according to the first policy, when the first network determines that transmission of first data to the terminal device fails, the first network notifies the application server, instead of the terminal device notifying the application server. Therefore, a feedback delay of a notification of transmission failure is shortened, so that the application server (that is, a transmitting device of the first data) quickly senses a data transmission failure, a retransmission delay is reduced, and data transmission efficiency is improved, thereby helping improve user experience.

In a possible design, that the first network device sends a first message to a third network device in the first network includes: sending the first message to the third network device via a fifth network device in the first network.

For example, the first network device is a session management network element, the third network device is an access network device, and the fifth network device is a mobility and access management network element.

In this way, the first network device sends the first message to the third network device by using a control plane signaling message, to indicate the third network device to notify a core network in the case that the third network device fails to transmit the data to the terminal device.

In a possible design, the first policy includes a data type. That the first policy indicates the first network to notify the application server in a case that the application server fails to transmit data to the terminal device through the first network includes:
The first policy indicates the first network to notify the application server when the following case occurs: The application server fails to transmit, to the terminal device through the first network, data indicated by the data type.

Correspondingly, for data that is not indicated by the data type, it may be understood as:

That the first policy is used to request the first network to notify the application server in a case that the application server fails to transmit the data to the terminal device through the first network includes:
The first policy indicates the first network not to notify the application server when the following case occurs: The application server fails to transmit, to the terminal device through the first network, the data that is not indicated by the data type.

In a possible design, the first policy includes an importance condition. That the first policy indicates the first network to notify the application server in a case that the application server fails to transmit data to the terminal device through the first network includes:

The first policy indicates the first network to notify the application server when the following case occurs: The application server fails to transmit, to the terminal device through the first network, data meeting the importance condition.

Correspondingly, for data that does not meet the importance condition, it may be understood as:
That the first policy is used to request the first network to notify the application server in a case that the application server fails to transmit the data to the terminal device through the first network includes:

The first policy indicates the first network not to notify the application server when the following case occurs: The application server fails to transmit, to the terminal device through the first network, the data that does not meet the importance condition.

In a possible design, the method further includes: The first network device receives delay information from the second network device, where the delay information indicates a maximum delay between a client of the terminal device and the application server for acknowledging success or failure of the data transmission.

The first network device sends retransmission duration to the third network device, where the retransmission duration indicates duration for performing retransmission in the case that the third network device fails to transmit the data to the terminal device within a preset delay requirement, and the retransmission duration is determined by the first network device based on the delay information.

In other words, when the third network device performs retransmission, a reference basis for determining the retransmission duration by the first network device in the first network includes the delay information, so that the retransmission duration is more appropriate, and a possibility that the retransmission duration is excessively long or excessively short is reduced to some extent.

In a possible design, the method further includes: The first network device receives the delay information from the second network device, where the delay information indicates the maximum delay that is between the client of the terminal device and the application server and that is used to acknowledge that the data transmission succeeds or fails.

The first network device sends the delay information to the third network device, where the delay information is used to determine the retransmission duration, and the retransmission duration indicates the duration for performing retransmission in the case that the third network device fails to transmit the data to the terminal device within the preset delay requirement.

In other words, when the third network device performs retransmission, the first network device in the first network provides the reference basis, that is, the delay information, for determining the retransmission duration, so that the retransmission duration is more appropriate, and the possibility that the retransmission duration is excessively long or excessively short is reduced to some extent.

In a possible design, the method further includes: The first network device receives the retransmission duration from the second network device, where the retransmission duration indicates the duration for performing retransmission in the case that the third network device fails to transmit the data to the terminal device within the preset delay requirement. The retransmission duration is determined by the second network device based on the delay information. The delay information indicates the maximum delay that is between the client of the terminal device and the application server and that is used to acknowledge that the data transmission succeeds or fails.

The first network device sends the retransmission duration to the third network device.

In other words, when the third network device performs retransmission, the second network device provides the retransmission duration for the first network device, so that the first network device provides the retransmission duration for the third network device. A reference basis for determining the retransmission duration by the second network device in the first network includes the delay information, so that the retransmission duration is more appropriate, and the possibility that the retransmission duration is excessively long or excessively short is reduced to some extent.

In a possible design, when the first message indicates the third network device to notify the fourth network device in a case that the application server fails to transmit the data to the terminal device through the first network, the method further includes: The first network device receives the delay information from the second network device, where the delay information indicates the maximum delay that is between the client of the terminal device and the application server and that is used to acknowledge that the data transmission succeeds or fails.

The first network device sends the retransmission duration to the fourth network device, where the retransmission duration indicates duration for performing retransmission when the fourth network device fails to transmit data to the terminal device within the preset delay requirement, and the retransmission duration is determined by the first network device based on the delay information.

In other words, when the fourth network device performs retransmission, the first network device provides the retransmission duration for the fourth network device. The reference basis for determining the retransmission duration by the first network device in the first network includes the delay information, so that the retransmission duration is more appropriate, and the possibility that the retransmission duration is excessively long or excessively short is reduced to some extent.

In a possible design, when the first message indicates the third network device to notify the fourth network device in a case that the application server fails to transmit the data to the terminal device through the first network, the method further includes: The first network device receives the delay information from the second network device, where the delay information indicates the maximum delay that is between the client of the terminal device and the application server and that is used to acknowledge that the data transmission succeeds or fails.

The first network device sends the delay information to the fourth network device, where the delay information is used to determine the retransmission duration, and the retransmission duration indicates the duration for performing retransmission in the case that the fourth network device fails to transmit the data to the terminal device within the preset delay requirement.

In other words, when the fourth network device performs retransmission, the first network device provides the delay information for the fourth network device, to be specific, provides, for the fourth network device, the reference basis used to determine the retransmission duration, so that the retransmission duration is more appropriate, and the possibility that the retransmission duration is excessively long or excessively short is reduced to some extent.

In a possible design, the method further includes: The first network device receives the retransmission duration from the second network device, where the retransmission duration indicates the duration for performing retransmission when the fourth network device fails to transmit the data to the terminal device within the preset delay requirement, the retransmission duration is determined based on the delay information, and the delay information indicates the maximum delay between the client of the terminal device and the application server that is used to acknowledge that the data transmission succeeds or fails.

The first network device sends the retransmission duration to the fourth network device.

In other words, when the fourth network device performs retransmission, the second network device provides the retransmission duration for the first network device, so that the first network device provides the retransmission duration for the fourth network device. The reference basis for determining the retransmission duration by the second network device in the first network includes the delay information, so that the retransmission duration is more appropriate, and the possibility that the retransmission duration is excessively long or excessively short is reduced to some extent.

In a possible design, the retransmission duration is determined based on a frame rate, a packet data unit set delay budget PSDB, and the delay information.

In a possible design, the retransmission duration is determined based on the frame rate, a packet data unit delay budget PDB, and the delay information.

In a possible design, when the first message indicates the third network device to notify the fourth network device in the case that the third network device fails to transmit the data to the terminal device, after receiving the first policy from the second network device in the first network, the method further includes: The first network device sends a second message to the fourth network device, where the second message indicates the fourth network device to notify, when the fourth network device receives a notification of transmission failure from the third network device, the application server that the data transmission to the terminal device through the first network fails, and the second message is generated according to the first policy.

In this way, when the data transmission fails, the fourth network device notifies the application server.

In a possible design, when the first message indicates the third network device to notify the fourth network device in the case that the third network device fails to transmit the data to the terminal device, after the sending a first message to a third network device in the first network, the method further includes: The first network device receives a third message from the fourth network device, where the third message indicates that transmission of first data to the terminal device through the first network fails.

The first network device sends a fourth message to the second network device, where the fourth message indicates that the transmission of the first data to the terminal device through the first network fails.

In this way, when the data transmission fails, the fourth network device notifies the first network device, and then the first network device notifies the second network device, so that the second network device notifies the application server.

In a possible design, at least one of the third message or the fourth message includes a first identifier indicative of the first data.

In a possible design, when the first message indicates the third network device to notify the first network device in the case that the third network device fails to transmit the data to the terminal device, after the sending a first message to a third network device in the first network, the method further includes: The first network device sends a fourth message to the second network device when receiving a notification of transmission failure from the third network device, where the notification of transmission failure and the fourth message indicate that transmission of first data to the terminal device through the first network fails.

In this way, when the data transmission fails, the third network device notifies the first network device, and then the first network device notifies the second network device, so that the second network device notifies the application server.

In a possible design, the notification of transmission failure includes a second identifier, and the second identifier indicates the first data.

In a possible design, the fourth message includes the first identifier indicative of the first data.

In a possible design, when the first identifier includes a GTP SN of an interface between the fourth network device and the application server, and the fourth network device is a user plane network element, after receiving the notification of transmission failure from the third network device, and before sending the fourth message to the second network device, the method further includes: The first network device sends the second identifier to the fourth network device.

The first network device receives the first identifier from the fourth network device, where the first identifier is determined by the fourth network device based on the first identifier.

In other words, the fourth network device can perform packet number conversion processing, to be specific, convert the second identifier into the first identifier, so that the application server can determine, based on the first identifier, the first data that fails to be transmitted.

In a possible design, the first identifier includes at least one of the following:
a data packet sequence number corresponding to a network layer protocol;
a data packet sequence number corresponding to a transport protocol layer;
a data packet sequence number corresponding to an application protocol layer; or
a general packet radio service tunneling protocol sequence number GTP SN of a first interface, where the first interface is an interface between the fourth network device and the application server, and the fourth network device is a user plane network element.

In a possible design, the second network device is a policy control network element, the fourth network device is a user plane network element, the first network device is a session management network element, and the third network device is an access network device.

According to a second aspect, a communication method is provided. The method may be performed by a second network device in a first network, or may be performed by a chip used in the second network device. The first network is used for communication between an application server and a terminal device. The following uses an example in which the method is performed by the second network device for description. The method includes the following steps.

The second network device determines a first policy, where the first policy indicates the first network to notify the application server in a case that the application server fails to transmit data to the terminal device through the first network.

The second network device sends the first policy to a first network device in the first network.

In other words, the second network device determines the first policy, to indicate, when the first network determines that transmission of first data to the terminal device fails, the first network to notify the application server, instead of the terminal device notifying the application server. Therefore, a feedback delay of a notification of transmission failure is shortened, so that the application server (that is, a transmitting device of the first data) quickly senses a data transmission failure, a retransmission delay is reduced, and data transmission efficiency is improved, thereby helping improve user experience.

In a possible design, the first policy includes a data type.

That the first policy indicates the first network to notify the application server in a case that the application server fails to transmit data to the terminal device through the first network includes:
The first policy indicates the first network to notify the application server when the following case occurs: The application server fails to transmit, to the terminal device through the first network, data indicated by the data type.

In a possible design, the first policy includes an importance condition.

That the first policy indicates the first network to notify the application server in a case that the application server fails to transmit data to the terminal device through the first network includes:
The first policy indicates the first network to notify the application server when the following case occurs: The application server fails to transmit, to the terminal device through the first network, data meeting the importance condition.

In a possible design, that the second network device determines a first policy includes: receiving a request message from the application server, and determining the first policy based on the request message. The request message is used to request the first network to notify the application server in a case that the application server fails to transmit the data to the terminal device through the first network.

In other words, the second network device generates the first policy in response to the request message of the application server, to meet a use requirement of the application server.

In a possible design, after the sending the first policy to a first network device in the first network, the method further includes: The second network device receives a fourth message from the first network device, where the fourth message indicates that the transmission of the first data to the terminal device through the first network fails.

The second network device sends a fifth message to the application server, where the fifth message indicates that the transmission of the first data to the terminal device through the first network fails.

In a possible design, at least one of the fourth message or the fifth message includes a first identifier indicative of the first data.

In a possible design, the first identifier includes at least one of the following:
a data packet sequence number corresponding to a network layer protocol;
a data packet sequence number corresponding to a transport protocol layer;
a data packet sequence number corresponding to an application protocol layer; or
a general packet radio service tunneling protocol sequence number GTP SN of a first interface, where the first interface is an interface between the fourth network device in the first network and the application server, and the fourth network device is a user plane network element.

In a possible design, the method further includes: The second network device receives delay information from the application server, where the delay information indicates a maximum delay between a client of the terminal device and the application server for acknowledging success or failure of the data transmission.

The second network device sends the delay information or retransmission duration to the first network device, where the retransmission duration indicates duration for performing retransmission when a fourth network device or a third network device fails to transmit data to the terminal device within a preset delay requirement, and the retransmission duration is determined by the second network device based on the delay information.

In a possible design, the second network device is a policy control network element, and the first network device is a session management network element.

According to a third aspect, a communication method is provided. The method may be performed by a fourth network device in a first network, or may be performed by a chip used in the fourth network device. The first network is used for communication between an application server and a terminal device. The following uses an example in which the method is performed by the fourth network device for description. The method includes the following steps.

The fourth network device receives a second message from a first network device in the first network, where the second message indicates the fourth network device to notify, in a case that the fourth network device receives a notification of transmission failure from a third network device in the first network, the application server that transmission of first data to the terminal device through the first network fails.

The fourth network device notifies the application server based on the second message in the case of receiving the notification of transmission failure.

That the fourth network device notifies the application server includes: The fourth network device directly notifies the application server, or the fourth network device notifies the application server via another network device.

In other words, when the data transmission fails, the fourth network device in the first network notifies the application server, in other words, the first network notifies the application server, instead of the terminal device notifying the application server. Therefore, a feedback delay of the notification of transmission failure is shortened, so that the application server (that is, a transmitting device of the first data) quickly senses a data transmission failure, a retransmission delay is reduced, and data transmission efficiency is improved, thereby helping improve user experience.

In a possible design, before notifying the application server based on the second message, the method further includes: The fourth network device receives retransmission duration or delay information from the first network device.

The delay information indicates a maximum delay between a client of the terminal device and the application server for acknowledging success or failure of the data transmission, and the delay information is used by the fourth network device to determine the retransmission duration.

The retransmission duration indicates duration for performing retransmission in a case that the fourth network device fails to transmit data to the terminal device within a preset delay requirement.

In other words, when the fourth network device performs retransmission, a reference basis for determining the retransmission duration by the first network includes the delay information, so that the retransmission duration is more appropriate.

In a possible design, after receiving the retransmission duration or delay information from the first network device, notifying the application server based on the second message in the case of receiving the notification of transmission failure includes: The fourth network device starts a retransmission timer in a case of receiving the notification of transmission failure for the first time.

The fourth network device retransmits the first data during running of the retransmission timer.

The fourth network device notifies the application server based on the second message when the fourth network device receives the notification of transmission failure again and the running of the retransmission timer expires, where running duration of the retransmission timer is the retransmission duration.

In other words, the fourth network device performs retransmission, and the fourth network device notifies the application server when the retransmission duration is exceeded and the transmission of the first data still fails.

In a possible design, the retransmission duration is determined based on a frame rate, a packet data unit set delay budget PSDB, and the delay information.

In a possible design, the retransmission duration is determined based on the frame rate, a packet data unit delay budget PDB, and the delay information.

In a possible design, that the fourth network device notifies the application server based on the second message in the case of receiving the notification of transmission failure includes:

The fourth network device sends a fifth message to the application server based on the second message in the case of receiving the notification of transmission failure, where the fifth message indicates that the transmission of the first data to the terminal device through the first network fails. It may be understood as that the fourth network device directly notifies the application server.

In other words, the fourth network device directly notifies the application server when the retransmission duration is exceeded and the transmission of the first data still fails.

In a possible design, that the fourth network device notifies the application server based on the second message in the case of receiving the notification of transmission failure includes:
The fourth network device sends a notification message to the application server based on the second message through the first network device and a second network device in the first network in the case of receiving the notification of transmission failure, where the notification message indicates that the transmission of the first data to the terminal device through the first network fails.

For example, the notification message includes the following three items: a message of which the third network device notifies the first network device, a message of which the first network device notifies the second network device, and a message of which the second network device notifies the application server.

In other words, when the retransmission duration is exceeded and the transmission of the first data still fails, the fourth network device notifies the application server via another network device, for example, the first network device and the second network device.

In a possible design, the fifth message includes a first identifier indicative of the first data.

In a possible design, the notification message includes the first identifier indicative of the first data.

In a possible design, the first identifier includes at least one of the following:
a data packet sequence number corresponding to a network layer protocol;
a data packet sequence number corresponding to a transport protocol layer;
a data packet sequence number corresponding to an application protocol layer; or
a general packet radio service tunneling protocol sequence number GTP SN of a first interface, where the first interface is an interface between the fourth network device and the application server, and the fourth network device is a user plane network element.

In a possible design, the notification of transmission failure and the fifth message further indicate that transmission of second data to the terminal device through the first network fails. The second data is associated with the first data, and is discarded by the third network device.

To be specific, when the transmission of the first data fails, the third network device discards the second data, and indicates, by using the fifth message, that the transmission of the second data fails.

In a possible design, the notification of transmission failure and the notification message further indicate that the transmission of the second data to the terminal device through the first network fails. The second data is associated with the first data, and is discarded by the third network device.

To be specific, when the transmission of the first data fails, the third network device discards the second data, and indicates, by using the notification message, that the transmission of the second data fails.

In a possible design, the fifth message further indicates that the transmission of the second data to the terminal device through the first network fails. The second data is associated with the first data, and is discarded by the fourth network device.

To be specific, when the transmission of the first data fails, the fourth network device discards the second data, and indicates, by using the fifth message, that the transmission of the second data fails.

In a possible design, the notification message further indicates that the transmission of the second data to the terminal device through the first network fails. The second data is associated with the first data, and is discarded by the fourth network device.

To be specific, when the transmission of the first data fails, the fourth network device discards the second data, and indicates, by using the notification message, that the transmission of the second data fails.

In a possible design, the fourth network device is a user plane network element, the first network device is a session management network element, and the third network device is an access network device.

According to a fourth aspect, a communication method is provided. The method may be performed by a third network device in a first network, or may be performed by a chip used in the third network device. The first network is used for communication between an application server and a terminal device. The following uses an example in which the method is performed by the third network device for description. The method includes the following steps.

The third network device receives a first message from a first network device in the first network, where the first message indicates the third network device to notify a fourth network device or the first network device in the first network in a case that the application server fails to transmit data to the terminal device through the first network.

The third network device sends, in a case that transmission of first data to the terminal device fails, a notification of transmission failure to a network device indicated by the first message, where the notification of transmission failure indicates that the transmission of the first data to the terminal device through the first network fails.

In other words, the application server requests the first network to send a notification of data transmission failure. When the first network determines that the transmission of the first data to the terminal device fails, the first network notifies the application server, instead of the terminal device notifying the application server. Therefore, a feedback delay of the notification of transmission failure is shortened, so that the application server (that is, a transmitting device of the first data) quickly senses a data transmission failure, a retransmission delay is reduced, and data transmission efficiency is improved, thereby helping improve user experience.

In a possible design, before sending the notification of transmission failure to the network device indicated by the first message, the method further includes: The third network device receives retransmission duration or delay information from the first network device.

The delay information indicates a maximum delay between a client of the terminal device and the application server for acknowledging success or failure of the data transmission, and the delay information is used by the third network device to determine the retransmission duration.

The retransmission duration indicates duration for performing retransmission in a case that the third network device fails to transmit data to the terminal device within a preset delay requirement.

In other words, when the third network device performs retransmission, a reference basis for determining the retransmission duration by the first network includes the delay information, so that the retransmission duration is more appropriate.

In a possible design, after receiving the retransmission duration or delay information from the first network device, sending, when transmission of the first data to the terminal device fails, the notification of transmission failure to the network device indicated by the first message includes:

The third network device starts a retransmission timer in the case that the transmission of the first data to the terminal device fails for the first time.

The third network device retransmits the first data during running of the retransmission timer.

The third network device sends, in a case that the transmission of the first data to the terminal device fails again and the running of the retransmission timer expires, the notification of transmission failure to the network device indicated by the first message.

In other words, the third network device performs retransmission. When the retransmission duration is exceeded and the transmission of the first data still fails, the third network device notifies the network device indicated by the first message, so that a core network notifies the application server.

In a possible design, the retransmission duration is determined based on a frame rate, a packet data unit set delay budget PSDB, and the delay information.

In a possible design, the retransmission duration is determined based on the frame rate, a packet data unit delay budget PDB, and the delay information.

In a possible design, the notification of transmission failure further indicates that transmission of second data to the terminal device through the first network fails. The second data is associated with the first data, and is discarded by the third network device.

In a possible design, the fourth network device is a user plane network element, the first network device is a session management network element, and the third network device is an access network device.

According to a fifth aspect, a communication method is provided. The method may be performed by an application server, or may be performed by a chip used in the application server. The application server communicates with a terminal device through a first network. The following uses an example in which the method is performed by the application server for description. The method includes the following steps.

The application server sends a request message to a second network device in the first network, where the request message is used to request the first network to notify the application server in a case that the application server fails to transmit data to the terminal device through the first network.

The application server receives a fifth message from a fourth network device in the first network, where the fifth message indicates that transmission of first data to the terminal device through the first network fails.

In other words, the application server requests the first network to send a notification of data transmission failure. When the first network determines that the transmission of the first data to the terminal device fails, the first network notifies the application server, instead of the terminal device notifying the application server. Therefore, a feedback delay of the notification of transmission failure is shortened, so that the application server (that is, a transmitting device of the first data) quickly senses a data transmission failure, a retransmission delay is reduced, and data transmission efficiency is improved, thereby helping improve user experience.

In a possible design, the fifth message includes a first identifier indicative of the first data.

In a possible design, the first identifier includes at least one of the following:
a data packet sequence number corresponding to a network layer protocol;
a data packet sequence number corresponding to a transport protocol layer;
a data packet sequence number corresponding to an application protocol layer; or
a general packet radio service tunneling protocol sequence number GTP SN of a first interface, where the first interface is an interface between the fourth network device and the application server, and the fourth network device is a user plane network element.

In a possible design, the request message includes a data type.

That the request message is used to request the first network to notify the application server in a case that the application server fails to transmit data to the terminal device through the first network includes:
The request message is used to request the first network to notify the application server when the following case occurs: The application server fails to transmit, to the terminal device through the first network, data indicated by the data type.

The data indicated by the data type includes the first data.

Correspondingly, for data that is not indicated by the data type, it may be understood as:
That the request message is used to request the first network to notify the application server in a case that the application server fails to transmit data to the terminal device through the first network includes:

The request message is used to request the first network not to notify the application server when the following case occurs: The application server fails to transmit, to the terminal device through the first network, the data that is not indicated by the data type.

In a possible design, the request message includes an importance condition. That the request message is used to request the first network to notify the application server in a case that the application server fails to transmit data to the terminal device through the first network includes:

The request message is used to request the first network to notify the application server when the following case occurs: The application server fails to transmit, to the terminal device through the first network, data meeting the importance condition. The data meeting the importance condition includes the first data.

Correspondingly, for data that does not meet the importance condition, it may be understood as:
That the request message is used to request the first network to notify the application server in a case that the application server fails to transmit data to the terminal device through the first network includes:

The request message is used to request the first network not to notify the application server when the following case occurs: The application server fails to transmit, to the terminal device through the first network, the data that does not meet the importance condition.

In a possible design, the request message further includes delay information, where the delay information indicates a maximum delay between a client of the terminal device and the application server for acknowledging success or failure of the data transmission.

In other words, the application server provides a reference basis, that is, the delay information, for determining retransmission duration by the first network, so that the retransmission duration is more appropriate, and a possibility that the retransmission duration is excessively long or excessively short is reduced to some extent.

In a possible design, after receiving the fifth message from the fourth network device in the first network, the method further includes: The application server retransmits the first data to the terminal device based on the fifth message.

In other words, the application server performs application layer (or transport layer) retransmission based on the fifth message, so that the terminal device successfully receives the first data.

In a possible design, the fourth network device includes one of the following: a user plane network element, a policy control network element, or a network capability exposure function network element.

In a possible design, the second network device includes one of the following: a policy control network element or a network capability exposure function network element.

According to a sixth aspect, a network device is provided. The network device is a first network device, and the first network device includes a processor and a memory. The processor is coupled to the memory, the memory stores program instructions, and when the program instructions stored in the memory are executed by the processor, the first network device is caused to perform the method according to any one of the first aspect or the possible designs of the first aspect.

According to a seventh aspect, a network device is provided. The network device is a second network device, and the second network device includes a processor and a memory. The processor is coupled to the memory, the memory stores program instructions, and when the program instructions stored in the memory are executed by the processor, the second network device is caused to perform the method according to any one of the second aspect or the possible designs of the second aspect.

According to an eighth aspect, a network device is provided. The network device is a third network device, and the third network device includes a processor and a memory. The processor is coupled to the memory, the memory stores program instructions, and when the program instructions stored in the memory are executed by the processor, the third network device is caused to perform the method according to any one of the fourth aspect or the possible designs of the fourth aspect.

According to a ninth aspect, a network device is provided. The network device is a fourth network device, and the fourth network device includes a processor and a memory. The processor is coupled to the memory, the memory stores program instructions, and when the program instructions stored in the memory are executed by the processor, the fourth network device is caused to perform the method according to any one of the third aspect or the possible designs of the third aspect.

According to a tenth aspect, an application server is provided. The application server includes a processor and a memory. The processor is coupled to the memory, the memory stores program instructions, and when the program instructions stored in the memory are executed by the processor, the application server is caused to perform the method according to any one of the fifth aspect or the possible designs of the fifth aspect.

According to an eleventh aspect, a chip is provided. The chip includes a processor and a memory coupled to the processor. The memory stores a computer program, the chip is located in a first network device, and when the processor executes the computer program, the first network device is caused to perform the method according to any one of the first aspect or the possible designs of the first aspect.

According to a twelfth aspect, a chip is provided. The chip includes a processor and a memory coupled to the processor. The memory stores a computer program, the chip is located in a second network device, and when the processor executes the computer program, the second network device is caused to perform the method according to any one of the second aspect or the possible designs of the second aspect.

According to a thirteenth aspect, a chip is provided. The chip includes a processor and a memory coupled to the processor. The memory stores a computer program, the chip is located in a third network device, and when the processor executes the computer program, the third network device is caused to perform the method according to any one of the fourth aspect or the possible designs of the fourth aspect.

According to a fourteenth aspect, a chip is provided. The chip includes a processor and a memory coupled to the processor. The memory stores a computer program, the chip is located in a fourth network device, and when the processor executes the computer program, the fourth network device is caused to perform the method according to any one of the third aspect or the possible designs of the third aspect.

According to a fifteenth aspect, a chip is provided. The chip includes a processor and a memory coupled to the processor, the memory stores a computer program, the chip is located in an application server, and when the processor executes the computer program, the application server is caused to perform the method according to any one of the fifth aspect or the possible designs of the fifth aspect.

According to a sixteenth aspect, a computer-readable storage medium is provided. The computer-readable storage medium stores a computer program or instructions. When the computer program or the instructions are executed on a first network device, the first network device is caused to perform the method according to any one of the first aspect or the possible designs of the first aspect.

According to a seventeenth aspect, a computer-readable storage medium is provided. The computer-readable storage medium stores a computer program or instructions. When the computer program or the instructions are executed on a second network device, the second network device is caused to perform the method according to any one of the second aspect or the possible designs of the second aspect.

According to an eighteenth aspect, a computer-readable storage medium is provided. The computer-readable storage medium stores a computer program or instructions. When the computer program or the instructions are executed on a third network device, the third network device is caused to perform the method according to any one of the fourth aspect or the possible designs of the fourth aspect.

According to a nineteenth aspect, a computer-readable storage medium is provided. The computer-readable storage medium stores a computer program or instructions. When the computer program or the instructions are executed on a fourth network device, the fourth network device is caused to perform the method according to any one of the third aspect or the possible designs of the third aspect.

According to a twentieth aspect, a computer-readable storage medium is provided. The computer-readable storage medium stores a computer program or instructions. When the computer program or the instructions are executed on an application server, the application server is caused to perform the method according to any one of the fifth aspect or the possible designs of the fifth aspect.

According to a twenty-first aspect, a computer program product including instructions is provided. When the computer program product is run on a computer, the computer is caused to perform the method according to any possible design of the foregoing aspects.

According to a twenty-second aspect, a circuit system is provided. The circuit system includes a processing circuit configured to perform the method according to any one of the foregoing aspects.

According to a twenty-third aspect, a communication system is provided, including a first network device, a second network device, a third network device, a fourth network device, and an application server. The first network device is configured to perform the method according to any one of the first aspect and the possible designs of the first aspect, the second network device is configured to perform the method according to any one of the second aspect and the possible designs of the second aspect, the third network device is configured to perform the method according to any one of the fourth aspect and the possible designs of the fourth aspect, the fourth network device is configured to perform the method according to any one of the third aspect and the possible designs of the third aspect, and the application server is configured to perform the method according to any one of the fifth aspect and the possible designs of the fifth aspect.

For technical effects brought by any design of the sixth aspect to twenty-third aspect, refer to beneficial effects in corresponding methods provided above. Details are not described herein again.

### BRIEF DESCRIPTION OF DRAWINGS

FIG. 1 is a diagram of an architecture of a communication system to which an embodiment of this application is applied;
FIG. 2a is a diagram of an architecture of another communication system to which an embodiment of this application is applied;
FIG. 2b shows a user plane protocol according to an embodiment of this application;
FIG. 3 is a schematic flowchart of a feedback mechanism according to an embodiment of this application;
FIG. 4A and FIG. 4B are a schematic flowchart of a communication method according to an embodiment of this application;
FIG. 5A and FIG. 5B are a schematic flowchart of another communication method according to an embodiment of this application;
FIG. 6A and FIG. 6B are a schematic flowchart of another communication method according to an embodiment of this application;
FIG. 7a is a schematic flowchart of another communication method according to an embodiment of this application;
FIG. 7b is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic flowchart of another communication method according to an embodiment of this application;
FIG. 11 is a schematic flowchart of another communication method according to an embodiment of this application;
FIG. 12 is a schematic flowchart of another communication method according to an embodiment of this application; and
FIG. 13 is a diagram of a structure of a communication apparatus according to an embodiment of this application.

### DESCRIPTION OF EMBODIMENTS

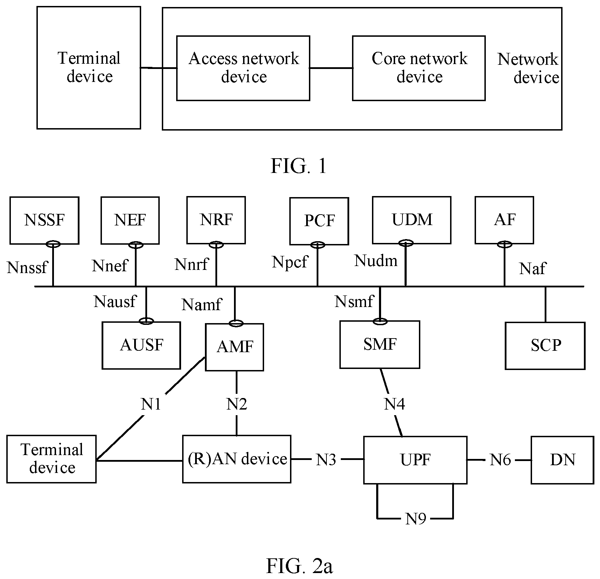

The following embodiments of this application may be applied to a communication system shown in FIG. 1. The communication system may be a communication system that supports a 4th generation (4th generation, 4G) access technology, for example, a long term evolution (long term evolution, LTE) access technology; the communication system may be a communication system that supports a 5th generation (5th generation, 5G) access technology, for example, a new radio (new radio, NR) access technology; or the communication system may be a communication system that supports a plurality of radio technologies, for example, a communication system that supports the LTE technology and the NR technology. In addition, the communication system is also applicable to a future-oriented communication technology.

FIG. 1 is a diagram of an architecture of a communication system according to an embodiment of this application. As shown in FIG. 1, the communication system includes a terminal device and a network device. The network device includes an access network (access network, AN) device and a core network device. The access network device may alternatively be replaced with a radio access network (radio access network, RAN) device.

The terminal device accesses a core network via the access network device or the radio access network device. The terminal device includes a device that provides voice and/or data connectivity for users. Specifically, the terminal device includes a device that provides voice for users, includes a device that provides data connectivity for users, or includes a device that provides voice and data connectivity for users. For example, the terminal device may include a handheld device having a wireless connection function or a processing device connected to a wireless modem. The terminal device may communicate with the core network through a radio access network, exchange voice or data with a RAN, or interact voice and data with a RAN. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, a portable, pocket-sized, hand-held, or a computer-embedded mobile apparatus, or the like. For example, the terminal device may be a device, like a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may further include a limited device, for example, a device with low power consumption, a device with a limited storage capability, or a device with a limited computing capability. For example, the terminal device includes an information sensing device like a barcode, a radio frequency identification (radio frequency identification, RFID), a sensor, a global positioning system (global positioning system, GPS), or a laser scanner.

If the various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board units, OBUs).

In embodiments of this application, the terminal device may further include a relay (relay). Alternatively, it is understood as that any device that can perform data communication with a base station may be considered as the terminal device.

In embodiments of this application, an apparatus configured to implement a function of the terminal device may be a terminal device, or may be an apparatus that can support the terminal device in implementing the function, for example, a chip system. The apparatus may be installed in the terminal device. In embodiments of this application, the chip system may include a chip, or may include a chip and another discrete component. In technical solutions provided in embodiments of this application, an example in which the apparatus configured to implement the function of the terminal is the terminal device is used for description.

The access network device may be a device that can connect the terminal device to a wireless network. The access network device in embodiments of this application may include various forms of base stations (base stations), for example, may be a macro base station, a micro base station (also referred to as a small cell), a relay station, an access point, a transmission point (transmission point, TP), an evolved NodeB (evolved NodeB, eNodeB), a transmission reception point (transmission reception point, TRP), a next-generation base station (next-generation base station, gNB) in a 5G mobile communication system, a device that implements a base station function in an evolved communication system after 5G, a mobile switching center, a device that bears a base station function in device-to-device (device-to-device, D2D), vehicle-to-everything (vehicle-to-everything, V2X), or machine-to-machine (machine-to-machine, M2M) communication, or the like; may be an access network device in a non-terrestrial network (non-terrestrial network, NTN) communication system, that is, may be deployed on a high-altitude platform or a satellite; or may be a module or a unit that completes a part of functions of a base station, for example, may be a central unit (central unit, CU) or a distributed unit (distributed unit, DU) in a cloud access network (cloud radio access network, C-RAN) system. A specific technology and a specific device form used by the access network device are not limited in embodiments of this application. All or a part of functions of the access network device may alternatively be implemented by using a software function running on hardware, or implemented by using a virtualized function instantiated on a platform (for example, a cloud platform). In embodiments of this application, unless otherwise specified, the access network device is the radio access network device.

Different core network devices in the core network are described as follows.

A user plane network element is configured to perform packet routing and forwarding, quality of service (quality of service, QoS) handling on user plane data, and the like. As shown in FIG. 2a, in a 5G communication system, a user plane network element may be a user plane function (user plane function, UPF) network element. In a future communication system, the user plane network element may still be a UPF network element, or may have another name. This is not limited in embodiments of this application.

A data network (data network, DN) network element is configured to provide a network for data transmission. As shown in FIG. 2a, in the 5G communication system, a data network may be a DN. In the future communication system, the data network may still be a DN, or may have another name. This is not limited in embodiments of this application.

An authentication service network element is configured to: perform service authentication, generate a key to implement two-way authentication for a terminal device, and support a unified authentication framework. As shown in FIG. 2a, in the 5G communication system, the authentication service network element may be an authentication server function (authentication server function, AUSF) network element. In the future communication system, the authentication server function network element may still be an AUSF network element, or may have another name. This is not limited in embodiments of this application.

An access and mobility management network element is configured to perform mobility management, access management, and the like, and may be configured to implement functions, for example, lawful intercept and access authorization/authentication, other than session management in functions of a mobility management network element (mobility management entity, MME). As shown in FIG. 2a, in the 5G communication system, the access and mobility management network element may be an access and mobility management function (access and mobility management function, AMF) network element. In the future communication system, the access and mobility management network element may still be an AMF network element, or may have another name. This is not limited in embodiments of this application.

A session management network element is mainly configured for session management, internet protocol (internet protocol, IP) address allocation and management of a terminal device, selection and management of a user plane function, termination of interfaces towards policy control and charging functions, downlink data notification, and the like. As shown in FIG. 2a, in the 5G communication system, the session management network element may be a session management function (session management function, SMF) network element. In the future communication system, the session management network element may still be an SMF network element, or may have another name. This is not limited in embodiments of this application.

A service communication function network element is configured to provide a function of selecting communication between network function (network function, NF) network elements. As shown in FIG. 2a, in the 5G communication system, the service communication function network element may be a service communication function (service communication function, SCP) network element. In the future communication system, the service communication function network element may still be an SCP network element, or may have another name. This is not limited in embodiments of this application.

A network slice selection function network element is configured to provide a network slice selection function. As shown in FIG. 2a, in the 5G communication system, the network slice selection function network element may be a network slice selection function (network slice selection function, NSSF) network element. In the future communication system, the network slice selection function network element may still be an NSSF network element, or may have another name. This is not limited in embodiments of this application.

A network capability exposure function network element is configured to provide a network customization function. As shown in FIG. 2a, in the 5G communication system, the network capability exposure function network element may be a network capability exposure function (network exposure function, NEF) network element. In the future communication system, the network capability exposure function network element may still be an NEF network element, or may have another name. This is not limited in embodiments of this application.

A network repository network element is configured to maintain real-time information of all network function services in a network. As shown in FIG. 2a, in the 5G communication system, the network repository network element may be a network repository function (network repository function, NRF) network element. In the future communication system, the network repository network element may still be an NRF network element, or may have another name. This is not limited in embodiments of this application.

A policy control network element is configured to support a unified policy framework to govern network behavior, provide policy rule information for a control plane network element (for example, an AMF network element or an SMF network element), and the like.

In a 4G communication system, the policy control network element may be a policy and charging rules function (policy and charging rules function, PCRF) network element. As shown in FIG. 2a, in the 5G communication system, the policy control network element may be a policy control function (policy control function, PCF) network element. In the future communication system, the policy control network element may still be a PCF network element, or may have another name. This is not limited in embodiments of this application.

A data management network element is configured for terminal device identification handling, access authentication, registration, mobility management, and the like. As shown in FIG. 2a, in the 5G communication system, the data management network element may be a unified data management (unified data management, UDM) network element. In the future communication system, the data management network element may still be a UDM network element, or may have another name. This is not limited in embodiments of this application.

An application network element is configured to: perform application-influenced data routing, access a network exposure function network element, interact with a policy framework to perform policy control, and the like. As shown in FIG. 2a, in the 5G communication system, the application network element may be an application function (application function, AF) network element. In the future communication system, the application network element may still be an AF network element, or may have another name, such as an application server, a service server, or a third-party server. This is not limited in embodiments of this application. In embodiments of this application, the application server is used as an example for description.

Refer to FIG. 2a. A terminal device accesses a 5G network via a (R)AN device, and the terminal device communicates with an AMF network element through an N1 interface (N1 for short). The (R)AN device communicates with the AMF network element through an N2 interface (N2 for short). The (R)AN device communicates with a UPF network element through an N3 interface (N3 for short). An SMF network element communicates with the UPF network element through an N4 interface (N4 for short). The UPF network element accesses a DN through an N6 interface (N6 for short). Different UPF network elements communicate with each other through an N9 interface (N9 for short). In the architecture shown in FIG. 2a, N1, N2, N3, N4, N6, and N9 respectively represent reference points (reference points) between related network elements/network functions. The (R)AN device is an AN device or a RAN device.

In addition, control plane functions such as an AUSF network element, the AMF network element, the SMF network element, an NSSF network element, an NEF network element, an NRF network element, a PCF network element, a UDM network element, or an AF network element shown in FIG. 2a may interact with each other through a service-based interface. For example, a service-based interface exhibited by the AUSF network element is Nausf, a service-based interface exhibited by the AMF network element is Namf, a service-based interface exhibited by the SMF network element is Nsmf, a service-based interface exhibited by the NSSF network element is Nnssf, a service-based interface exhibited by the NEF network element is Nnef, a service-based interface exhibited by the NRF network element is Nnrf, a service-based interface exhibited by the PCF network element is Npcf, a service-based interface exhibited by the UDM network element is Nudm, and a service-based interface exhibited by the AF network element is Naf. For related function descriptions and interface descriptions, refer to a diagram of a 5G system architecture (5G system architecture) in the TS 23.501 standard. Details are not described herein.

Optionally, the core network devices may be implemented by one device, may be jointly implemented by a plurality of devices, or may be implemented by one functional module in one device. This is not specifically limited in embodiments of this application. It may be understood that the functional module may be a network element in a hardware device, may be a software functional module running on dedicated hardware, or may be a virtualized functional module instantiated on a platform (for example, a cloud platform).

Optionally, in embodiments of this application, the term "network element" may be replaced with "entity", "device", and the like. For example, the "AMF network element" may also be written as an "AMF entity" or an "AMF device", and the "SMF network element" may also be written as an "SMF entity" or an "SMF device". In addition, in some embodiments, for ease of description, an "XXX network element" is abbreviated as an "XXX". For example, the "AUSF network element" may also be abbreviated as an "AUSF", and the "SMF network element" may also be abbreviated as an "SMF". In embodiments of this application, the XXX network element is used as an example for description. Unified descriptions are provided herein. Details are not described below again.

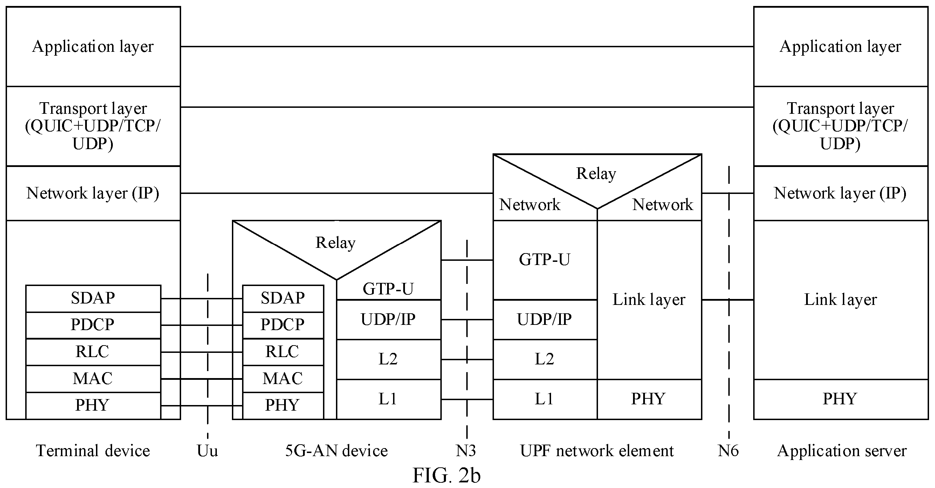

FIG. 2b shows a user plane protocol model from a terminal device to an application server.

The protocol model includes an application layer (application layer), a transport layer (transport layer), a network layer (network layer), a link layer (link layer), and a physical layer (physical layer) from top to bottom.

In FIG. 2b, a connection used to send and receive data is located at the transport layer, and the transport layer is an end-to-end protocol layer from the terminal device to the application server. A related protocol of the transport layer includes the quick user datagram protocol internet connection (quick user datagram protocol internet connection, QUIC) protocol and the user datagram protocol (user datagram protocol, UDP), the UDP protocol, the transmission control protocol (transmission control protocol, TCP), or the like.

It is easy to understand that, in some protocol classification models, the QUIC protocol is classified as an application layer protocol instead of a transport layer protocol. In embodiments of this application, an example in which the transport layer includes the QUIC protocol is used for description. This should not be construed as any limitation on this application.

Below the network layer is formed by interconnection of several different 3GPP network protocol stacks from the terminal device to an access network device and from the access network device to a user plane network element. Specifically, a 3GPP network protocol stack between the terminal device and the access device includes a service data adaptation protocol (service data adaptation protocol, SDAP) layer, a packet data convergence protocol (packet data convergence protocol, PDCP) layer, and lower protocol layers. The lower-layer protocol layers include a radio link control (radio link control, RLC) layer, a media access control (media access control, MAC) layer, and a physical (physical, PHY) layer. A 3GPP network protocol stack between the access network device and the user plane network element includes a general packet radio service (general packet radio service, GPRS) tunneling protocol for the user plane (GPRS tunneling protocol for the user plane, GTP-U) layer and lower-layer protocol layers. The lower-layer protocol layers include a user datagram protocol (user datagram protocol, UDP) layer/internet protocol (internet protocol, IP) layer, a layer 2 (level 2, L2), and a layer 1 (level 1, L1). The access network device and the user plane network element belong to a 3GPP network.

A network protocol stack between the terminal device and the user plane network element includes the network layer. A network protocol stack between the user plane network element and the application server includes the network layer, the link layer (link layer), and the physical layer.

For ease of understanding embodiments of this application, the following first briefly describes related technologies or terms in embodiments of this application. It should be understood that these descriptions are merely intended to facilitate understanding of embodiments of this application, and shall not constitute any limitation on this application.

### 1. Quick user datagram protocol internet connection (quick user datagram protocol internet connection, QUIC) protocol

The QUIC protocol is a network transmission protocol based on the user datagram protocol (user datagram protocol, UDP).

A client and a service end may perform data transmission on one physical path by using the QUIC protocol.

The client may be an application program running on the terminal device. For the terminal device, refer to the descriptions of FIG. 1. Details are not described herein again.

The service end may serve the client, and the service end may provide resources for the client, store client data, and the like. In addition, the service end may also be referred to as a server, an application server (application server, AS), or the like. In embodiments of this application, the application server is used as an example for description.

The QUIC protocol is implemented based on the transport layer protocol UDP. This ensures compatibility with an existing network, reduces a handshake delay, and further reduces a delay sense of a user accessing a network.

### 2. Feedback mechanism

A transmitting device sends data to a receiving device, and correspondingly, the receiving device receives the data from the transmitting device. The receiving device feeds back a data receiving status in specific time after receiving the data, for example, in a time period starting from a data receiving moment and with duration of Max_Ack_delay, so that the transmitting device determines whether to perform application layer (or transport layer) retransmission. Specifically, when the receiving device successfully receives the data, the receiving device sends an acknowledgment (acknowledgment, ACK) to the transmitting device. In this case, the transmitting device does not perform application layer (or transport layer) retransmission. On the contrary, when the receiving device fails to receive the data, the receiving device sends a negative acknowledgment (negative-acknowledgment, NACK) to the transmitting device. In this case, the transmitting device performs application layer (or transport layer) retransmission.

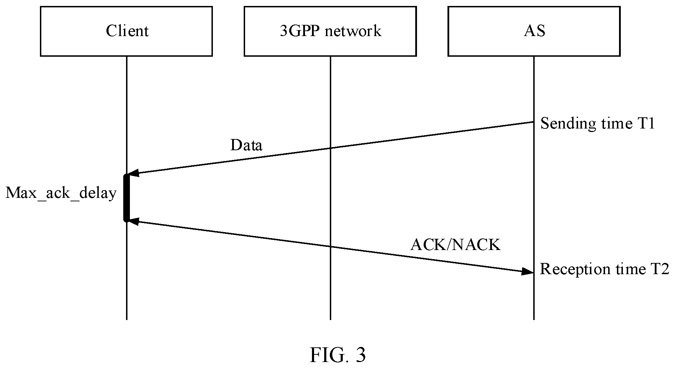

Refer to FIG. 3. A QUIC feedback mechanism is used as an example. An application server is used as a transmitting device of data, and a terminal device is used as a receiving device of the data. The AS sends the data to a client of the terminal device through a 3GPP network. Correspondingly, the client of the terminal device receives the data from the AS through the 3GPP network. When the client of the terminal device successfully receives the data, the client of the terminal device sends a QUIC layer ACK to the AS through the 3GPP network within a time period after the client of the terminal device receives the data. Correspondingly, the AS receives the QUIC layer ACK from the client through the 3GPP network. On an AS side, data sending time is recorded as T1, and ACK reception time is recorded as T2. On the contrary, when the client of the terminal device fails to receive the data, the client of the terminal device sends a QUIC layer NACK to the AS through the 3GPP network. Correspondingly, the AS receives the QUIC layer NACK from the client through the 3GPP network, and performs QUIC retransmission.

In some embodiments, for some services, for example, an extended reality (extended reality, XR) service, when a network resource is limited, the 3GPP network is allowed to actively discard data of low importance, to balance network transmission efficiency and user experience.

In addition, for data that is still not successfully transmitted after a transmission delay is exceeded, the 3GPP network (for example, an access network device in the 3GPP network or a user plane network element in a core network in the 3GPP network) discards the data, or discards the data and data that has an association relationship with the data. Certainly, for the data that is still not successfully transmitted after the transmission delay is exceeded, the 3GPP network (for example, the access network device in the 3GPP network or the user plane network element in the core network in the 3GPP network) may further perform retransmission within specific retransmission duration. When the retransmission fails, the 3GPP network (for example, the access network device in the 3GPP network or the user plane network element in the core network in the 3GPP network) discards the data, or discards the data and the data that has the association relationship with the data. The transmission delay may be determined based on a packet data unit delay budget (packet data unit delay budget, PDB) or a packet data unit set delay budget (packet data unit set delay budget, PSDB). The PDB may also be described as a data packet delay budget, and the PSDB may also be described as a data packet set delay budget, a data packet set delay budget, or the like.

However, when the 3GPP network (for example, the access network device in the 3GPP network or the user plane network element in the core network in the 3GPP network) discards the data, the receiving device of the data fails to receive the data. However, the receiving device feeds back a NACK only when a specific condition is met. For example, the receiving device feeds back the NACK only when duration of waiting for receiving the data exceeds Max_Ack_delay. Correspondingly, application layer retransmission is performed only after the transmitting device of the data receives the NACK. In other words, an application layer of the transmitting device cannot quickly sense a data transmission failure. As a result, a data transmission delay is high, and transmission efficiency is low.

In view of this, an embodiment of this application provides a first communication method. The communication method may be applied to the communication system shown in FIG. 1 or FIG. 2a, in other words, the application server can communicate with the terminal device through a first network. In the communication method provided in embodiments of this application, the application server sends a request message to a second network device (for example, a policy control network element) in the first network. The request message is used to request the first network to notify the application server in a case that the application server fails to transmit data to the terminal device through the first network. Then, the application server receives a fifth message from a fourth network device (for example, a user plane network element) in the first network when the application server fails to transmit first data to the terminal device through the first network. The fifth message indicates that transmission of the first data to the terminal device through the first network fails. In other words, the application server requests the first network to send a notification of data transmission failure. When the first network determines that the transmission of the first data to the terminal device fails, the first network notifies the application server, instead of the terminal device notifying the application server. Therefore, a feedback delay of the notification of transmission failure is shortened, so that the application server (that is, an application layer of a transmitting device of the first data) quickly senses a data transmission failure, a retransmission delay is reduced, and data transmission efficiency is improved, thereby helping improve user experience.

It should be understood that, in the following embodiments of this application, a name of a message between devices or a name or the like of each parameter in the message is merely an example, and may alternatively be another name in a specific implementation. This is not specifically limited in embodiments of this application. In embodiments of this application, the first network includes a core network and an access network. Unified descriptions are provided herein. Details are not described below again.

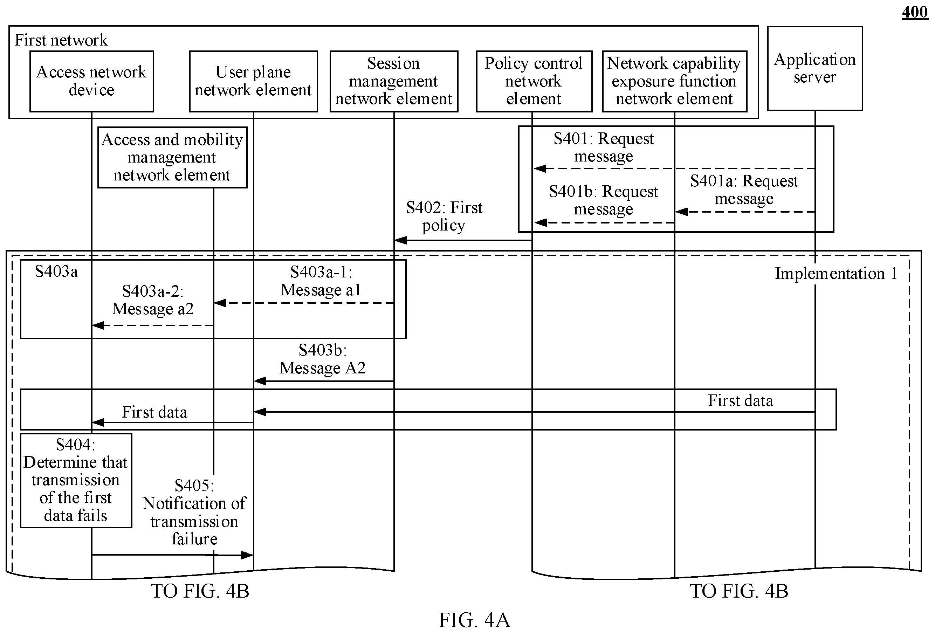

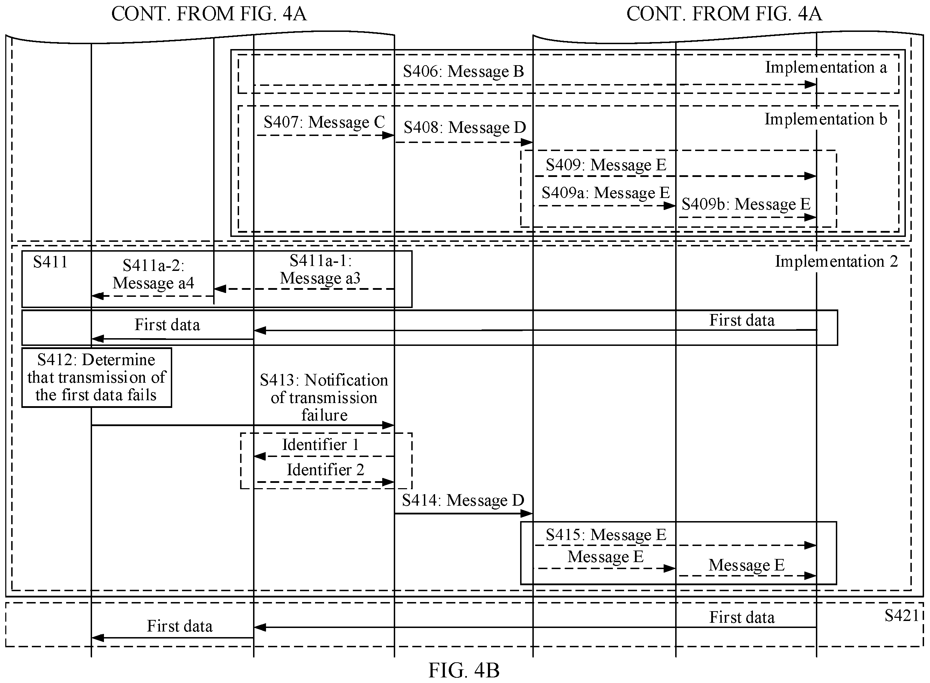

With reference to FIG. 4A and FIG. 4B, the following describes in detail a communication method provided in an embodiment of this application. The communication method 400 provided in this embodiment of this application includes the following steps.

S401: An application server sends a request message to a policy control network element. Correspondingly, the policy control network element receives the request message from the application server.

The request message is used to request a first network to notify the application server when the application server fails to transmit data to a terminal device through the first network.

For example, the request message may be a policy authorization creation request message, an AF session with creation request (AF session with QoS create request) message, or an AF session update request (AF session with QoS create update) message. The request message includes request information 1, and the request information 1 is used to request the first network to notify the application server in a case that the application server fails to transmit the data to the terminal device through the first network.

Optionally, the request message is described by using two examples (Example 1 and Example 2 in the following).

Example 1: The request message includes a data type. In this case, that the request message is used to request a first network to notify the application server when the application server fails to transmit data to a terminal device through the first network includes: The request message is used to request the first network to notify the application server when the application server fails to transmit, to the terminal device through the first network, data indicated by the data type.

For example, when data types are classified based on a data importance condition, a data type meeting an importance condition 1 is denoted as a data type 1, and a data type meeting an importance condition 2 is denoted as a data type 2. The data type included in the request message may be the data type 1. In this case, the request message is used to request the first network to notify the application server when the application server fails to transmit data of the data type 1 to the terminal device through the first network.

It is easy to understand that, in Example 1, the first network does not notify the application server when the application server fails to transmit, to the terminal device through the first network, data that is not indicated by the data type (for example, data of the data type 2). It may also be understood as that the request message is used to request the first network not to notify the application server when the application server fails to transmit, to the terminal device through the first network, the data that is not indicated by the data type.

It should be understood that there may be a plurality of data type classification standards. In this embodiment of this application, data importance is used as an example for description. This should not be construed as a limitation on this application.

Example 2: The request message includes an importance condition. In this case, that the request message is used to request a first network to notify the application server when the application server fails to transmit data to a terminal device through the first network includes: The request message is used to request the first network to notify the application server when the application server fails to transmit, to the terminal device through the first network, data meeting the importance condition.

For example, the importance condition includes an importance condition 1 and an importance condition 2. The request message is used to request the first network to notify the application server when the application server fails to transmit, to the terminal device through the first network, data meeting the importance condition 1.

It is easy to understand that, in Example 2, the first network does not notify the application server when the application server fails to transmit, to the terminal device through the first network, data that does not meet the importance condition (for example, data that does not meet the importance condition 1). It may also be understood as that the request message is used to request the first network not to notify the application server when the application server fails to transmit, to the terminal device through the first network, the data that does not meet the importance condition.

Optionally, S401 is described by using two examples (Case 1 and Case 2 in the following).

Case 1: When the application server interacts with the policy control network element via a network capability exposure function network element, S401 includes S401a and S401b.

S401a: The application server sends the request message to the network capability exposure function network element. Correspondingly, the network capability exposure function network element receives the request message from the application server.

S401b: The network capability exposure function network element sends the request message to the policy control network element. Correspondingly, the policy control network element receives the request message from the network capability exposure function network element.

Case 2: When the application server directly interacts with the policy control network element, the application server may send the request message to the policy control network element, and the request message is not transmitted via a network capability exposure function network element.

For the policy control network element, after receiving the request message, the policy control network element performs S402.

S402: The policy control network element sends a first policy to a session management network element. Correspondingly, the session management network element receives the first policy from the policy control network element.

The first policy is determined by the policy control network element based on the request message. For example, after performing S401 and before performing S402, the policy control network element performs the following processing: The policy control network element determines the first policy based on the request message.

The first policy indicates the first network to notify the application server in a case that the application server fails to transmit the data to the terminal device through the first network.

For example, the first policy may be a parameter in a policy and charging control (policy and charging control, PCC) rule, and is transmitted in a session management policy (SM policy) control service procedure.

Optionally, the first policy is described by using two examples (Example 1 and Example 2 in the following).

Example 1: The first policy includes a data type. In this case, that the first policy is used to request the first network to notify the application server in a case that the application server fails to transmit the data to the terminal device through the first network includes: The first policy is used to request the first network to notify the application server when the application server fails to transmit, to the terminal device through the first network, data indicated by the data type.

For example, the data type includes a data type 1 and a data type 2. The data type included in the first policy may be the data type 1. In this case, the first policy is used to request the first network to notify the application server when the application server fails to transmit data of the data type 1 to the terminal device through the first network.

It is easy to understand that, in Example 1, the first network does not notify the application server when the application server fails to transmit, to the terminal device through the first network, data that is not indicated by the data type (for example, data of the data type 2). It may also be understood as that the first policy is used to request the first network not to notify the application server when the application server fails to transmit, to the terminal device through the first network, the data that is not indicated by the data type.

It should be understood that when the request message includes the data type, the first policy also includes the data type, and the data type in the first policy is consistent with the data type in the request message.

Example 2: The first policy includes an importance condition. In this case, that the first policy is used to request the first network to notify the application server in a case that the application server fails to transmit the data to the terminal device through the first network includes: The first policy is used to request the first network to notify the application server when the application server fails to transmit, to the terminal device through the first network, data meeting the importance condition.

For example, the importance condition includes an importance condition 1 and an importance condition 2. The first policy is used to request the first network to notify the application server when the application server fails to transmit, to the terminal device through the first network, data meeting the importance condition 1.

It is easy to understand that, in Example 2, the first network does not notify the application server when the application server fails to transmit, to the terminal device through the first network, data that does not meet the importance condition (for example, data that does not meet the importance condition 1). It may also be understood as that the first policy is used to request the first network not to notify the application server when the application server fails to transmit, to the terminal device through the first network, the data that does not meet the importance condition.

It should be understood that, when the request message includes the importance condition, the first policy also includes the importance condition, and the importance condition in the first policy is consistent with the importance condition in the request message.

For the session management network element, after the session management network element receives the first policy, there may be the following two implementations (Implementation 1 and Implementation 2 in the following), so that an access network device notifies a core network device that transmission of first data fails.

Implementation 1: The access network device notifies a user plane network element. For details, refer to descriptions of S403a and S403b.

Implementation 2: The access network device notifies the session management network element. For details, refer to descriptions of S411.

The following describes Implementation 1 and Implementation 2 in detail.

Implementation 1: After receiving the first policy, the session management network element performs S403a and S403b.

S403a: The session management network element sends a message A1 to the access network device. Correspondingly, the access network device receives the message A1 from the session management network element.

The message A1 indicates the access network device to notify the user plane network element when the access network device fails to transmit data to the terminal device.

For example, the message A1 includes indication information 1. The indication information 1 indicates the access network device to notify the user plane network element when the access network device fails to transmit the data to the terminal device. The indication information 1 may be included in N2 session management information (N2 session management information, N2 SM information).

The message A1 is generated by the session management network element according to the first policy. For the first policy, refer to the descriptions of S402. Details are not described herein again.

Optionally, S403a includes: The session management network element sends the message A1 to the access network device via an access and mobility management network element. Correspondingly, the access network device receives the message A1 from the session management network element via the access and mobility management network element. Specifically, S403a includes the following steps.

S403a-1: The session management network element sends a message a1 to the access and mobility management network element. Correspondingly, the access and mobility management network element receives the message a1 from the session management network element.

The message a1 may be N1N2 message transfer (N1N2 message transfer), the N1N2 message transfer includes the N2 SM information, and the indication information 1 in the N2 SM information indicates the access network device to notify the user plane network element when the access network device fails to transmit the data to the terminal device.

S403a-2: The access and mobility management network element sends a message a2 to the access network device. Correspondingly, the access network device receives the message a2 from the access and mobility management network element.

The message a2 may be an N2 message (N2 message), and the N2 message includes the N2 SM information.

In this way, the session management network element sends the indication information 1 to the access network device by using a control plane signaling message, to indicate the access network device to notify the user plane network element when the access network device fails to transmit the data to the terminal device.

S403b: The session management network element sends a message A2 to the user plane network element. Correspondingly, the user plane network element receives the message A2 from the session management network element.

The message A2 indicates the user plane network element to notify, when the user plane network element receives a notification of transmission failure from the access network device, the application server that the data transmission to the terminal device through the first network fails. For details, refer to descriptions of Implementation a and Implementation b in the following. Details are not described herein.

For example, the message A2 is an N4 session modification (N4 session modification) message. An N4 rule (N4 rule) of the N4 session modification includes indication information 2, and the indication information 2 indicates the user plane network element to notify, when the user plane network element receives the notification of transmission failure from the access network device, the application server that the data transmission to the terminal device through the first network fails.

The message A2 is generated by the session management network element according to the first policy. For the first policy, refer to the descriptions of S402. Details are not described herein again.

For the application server, after performing S401, the application server sends the first data to the terminal device through the first network. For example, the application server sends the first data to the user plane network element. Correspondingly, the user plane network element receives the first data from the application server, and then sends the first data to the access network device. Correspondingly, the access network device receives the first data from the user plane network element, and then sends the first data to the terminal device. Correspondingly, the terminal device receives the first data from the access network device.

In a possible case, the terminal device successfully receives the first data, in other words, the application server successfully transmits the first data to the terminal device through the first network.

In another possible case, the terminal device fails to receive the first data, in other words, the application server fails to transmit the first data to the terminal device through the first network. In this case, the access network device performs S404 and S405.

S404: The access network device determines that the transmission of the first data fails.

For example, the first data may be one or more data packets. This is not limited in this embodiment of this application.

Optionally, that the transmission of the first data fails includes one or more of the following three cases.

Case 1: The access network device actively discards the first data. For example, when a network resource is limited, the access network device actively discards the first data.

Case 2: When the first data is not successfully transmitted within a transmission delay, the access network device determines that the transmission of the first data fails. For example, that the access network device determines that the transmission of the first data fails includes: the data transmission exceeds a transmission delay requirement, a transmission error occurs, or the like. The transmission delay may be determined based on a PDB or a PSDB.

Case 3: When the first data is not successfully transmitted within a transmission delay, and the transmission still fails after retransmission is performed, the access network device determines that the transmission of the first data fails.

S405: The access network device sends the notification of transmission failure to the user plane network element. Correspondingly, the user plane network element receives the notification of transmission failure from the access network device.

The notification of transmission failure indicates that the transmission of the first data to the terminal device through the first network fails. For example, the notification of transmission failure may be denoted as a data transmission failure.

Optionally, the notification of transmission failure includes an identifier 1. The identifier 1 indicates the first data.

For example, when the first data is a data packet, the identifier 1 may be an identifier of the data packet, for example, a sequence number (sequence number, SN) of a general packet radio service tunneling protocol (general packet radio service tunneling protocol, GTP) of an interface between the access network device and the user plane device. The interface between the access network device and the user plane device may be an N3 interface. For details, refer to the descriptions of FIG. 2a. Details are not described herein again.

For the user plane network element, after the user plane network element receives the notification of transmission failure, there may be the following two implementations (Implementation a and Implementation b in the following), so that the user plane network element notifies the application server that the transmission of the first data fails.

Implementation a: The user plane network element notifies the application server. For details, refer to descriptions of S406.

Implementation b: The user plane network element notifies the application server via the session management network element and the policy control network element. For details, refer to descriptions of S407.

The following describes Implementation a and Implementation b in detail.

Implementation a: After receiving the notification of transmission failure, the user plane network element performs S406.

S406: The user plane network element sends a message B to the application server. Correspondingly, the application server receives the message B from the user plane network element.

For the notification of transmission failure, refer to the descriptions of S405. Details are not described herein again.

The message B indicates that the transmission of the first data to the terminal device through the first network fails. For example, the message B may be denoted as a notification of transmission failure.

Optionally, the message B includes an identifier 2. The identifier 2 indicates the first data.

For example, when the first data is a data packet, the identifier 2 may be an identifier of the data packet. Specifically, the identifier 2 includes at least one of the following.

A first item is a data packet sequence number corresponding to a network layer protocol, for example, a data packet sequence number of an internet protocol (internet protocol, IP) layer.

A second item is a data packet sequence number corresponding to a transmission protocol layer, for example, a data packet sequence number of a UDP layer or a data packet sequence number of a QUIC layer.

A third item is a data packet sequence number corresponding to an application protocol layer.

A fourth item is a data packet sequence number of an interface protocol between the user plane network element and the application server. For example, when the interface protocol is a GTP protocol, the identifier 2 may be a GTP SN. An interface between the user plane network element and the application server may be an N6 interface. For details, refer to the descriptions of FIG. 2a. Details are not described herein again.

Optionally, when the notification of transmission failure includes the identifier 1, and the message B includes the identifier 2, the user plane network element performs the following step: The user plane network element determines the identifier 2 based on the identifier 1. There is a correspondence between the identifier 1 and the identifier 2.

In other words, the user plane network element can perform packet number conversion processing, that is, convert the identifier 1 into the identifier 2, so that the application server can determine, based on the identifier 2, the first data that fails to be transmitted.

Implementation b: After receiving the notification of transmission failure, the user plane network element performs S407.

S407: The user plane network element sends a message C to the session management network element. Correspondingly, the session management network element receives the message C from the user plane network element.

The message C indicates that the transmission of the first data to the terminal device through the first network fails.

Optionally, the message C includes the identifier 2. The identifier 2 indicates the first data. For the identifier 2, refer to the descriptions of S406. Details are not described herein again.

For the session management network element, after receiving the message C, the session management network element performs S408.

S408: The session management network element sends a message D to the policy control network element. Correspondingly, the policy control network element receives the message D from the session management network element.

The message D indicates that the transmission of the first data to the terminal device through the first network fails.

Optionally, when the message C includes the identifier 2, the message D also includes the identifier 2. For the identifier 2, refer to the descriptions of S406. Details are not described herein again.

For the policy control network element, after receiving the message D, the policy control network element performs S409.

S409: The policy control network element sends a message E to the application server. Correspondingly, the application server receives the message E from the policy control network element.

The message E indicates that the transmission of the first data to the terminal device through the first network fails.

Optionally, when the message D includes the identifier 2, the message E also includes the identifier 2. For the identifier 2, refer to the descriptions of S406. Details are not described herein again.

Optionally, S409 is described by using two examples (Case 1 and Case 2 in the following).

Case 1: When the policy control network element interacts with the application server via the network capability exposure function network element, S409 includes S409a and S409b.

S409a: The policy control network element sends the message E to the network capability exposure function network element. Correspondingly, the network capability exposure function network element receives the message E from the policy control network element.

S409b: The network capability exposure function network element sends the message E to the application server. Correspondingly, the application server receives the message E from the network capability exposure function network element.

Case 2: When the policy control network element directly interacts with the application server, the policy control network element may send the message E to the application server, and the message E is not transmitted via the network capability exposure function network element.

Implementation 2: After receiving the first policy, the session management network element performs S411.

S411: The session management network element sends a message A3 to the access network device. Correspondingly, the access network device receives the message A3 from the session management network element.

The message A3 indicates the access network device to notify the session management network element when the access network device fails to transmit data to the terminal device.

For example, the message A3 includes indication information 3. The indication information 3 indicates the access network device to notify the session management network element when the access network device fails to transmit the data to the terminal device. The indication information 3 may be included in N2 session management information (N2 session management information, N2 SM information).

The message A3 is generated by the session management network element according to the first policy. For the first policy, refer to the descriptions of S402. Details are not described herein again.

Optionally, S403a includes: The session management network element sends the message A3 to the access network device via an access and mobility management network element. Correspondingly, the access network device receives the message A3 from the session management network element via the access and mobility management network element. Specifically, S411a includes the following steps.

S411a-1: The session management network element sends a message a3 to the access and mobility management network element. Correspondingly, the access and mobility management network element receives the message a3 from the session management network element.

The message a3 may be N1N2 message transfer (N1N2 message transfer), the N1N2 message transfer includes the N2 SM information, and the indication information 3 in the N2 SM information indicates the access network device to notify the session management network element when the access network device fails to transmit the data to the terminal device.

S411a-2: The access and mobility management network element sends a message a4 to the access network device. Correspondingly, the access network device receives the message a4 from the access and mobility management network element.

The message a4 may be an N2 message (N2 message), and the N2 message includes the N2 SM information.

In this way, the session management network element sends the indication information 3 to the access network device by using a control plane signaling message, to indicate the access network device to notify the session management network element when the access network device fails to transmit the data to the terminal device.

For the application server, after performing S401, the application server sends the first data to the terminal device through the first network. In a possible case, the application server successfully transmits the first data to the terminal device through the first network.

In another possible case, the application server fails to transmit the first data to the terminal device through the first network. In this case, the access network device performs S412 and S413.

S412: The access network device determines that the transmission of the first data fails.

For an implementation process of S412, refer to the descriptions of S404. Details are not described herein again.

S413: The access network device sends a notification of transmission failure to the session management network element. Correspondingly, the session management network element receives the notification of transmission failure from the access network device.

The notification of transmission failure indicates that the transmission of the first data to the terminal device through the first network fails.

Optionally, the notification of transmission failure includes an identifier 1. The identifier 1 indicates the first data. For the notification of transmission failure, refer to the descriptions of S405. Details are not described herein again.

For the session management network element, after receiving the notification of transmission failure, the session management network element performs S414.

S414: The session management network element sends a message D to the policy control network element. Correspondingly, the policy control network element receives the message D from the session management network element.

The message D indicates that the transmission of the first data to the terminal device through the first network fails.

Optionally, the message D includes an identifier 2. For the identifier 2, refer to the descriptions of S406. Details are not described herein again.

Optionally, when the notification of transmission failure includes the identifier 1, and the message D includes the identifier 2, after receiving the notification of transmission failure, and before performing S414, the session management network element performs the following steps.

Step 1: The session management network element sends a message X to the user plane network element. Correspondingly, the user plane network element receives the message X from the session management network element.

The message X includes the identifier 1. For the identifier 1, refer to the descriptions of S405. Details are not described herein again.

Step 2: The user plane network element determines the identifier 2 based on the identifier 1.

There is a correspondence between the identifier 1 and the identifier 2. For the identifier 2, refer to the descriptions of S406. Details are not described herein again.

In other words, the user plane network element can perform packet number conversion processing, that is, convert the identifier 1 into the identifier 2, so that the application server can determine, based on the identifier 2, the first data that fails to be transmitted.

Step 3: The user plane network element sends a message Y to the session management network element. Correspondingly, the session management network element receives the message Y from the user plane network element.

The message Y includes the identifier 2. In this way, the session management network element may obtain the identifier 2 by using the foregoing steps 1 to 3, to notify, by using the identifier 2, the application server of the first data that fails to be transmitted.

For the policy control network element, after receiving the message D, the policy control network element performs S415.

S415: The policy control network element sends a message E to the application server. Correspondingly, the application server receives the message E from the policy control network element.

The message E indicates that the transmission of the first data to the terminal device through the first network fails.

Optionally, when the message D includes the identifier 2, the message E also includes the identifier 2. For the identifier 2, refer to the descriptions of S406. Details are not described herein again.

For ease of description, in a process in which the first network feeds back the notification of transmission failure, information "indicating that the application server fails to transmit the first data to the terminal device through the first network" is denoted as indication information K. Optionally, the indication information K includes the identifier 2, and the identifier 2 indicates that the application server fails to transmit the first data to the terminal device through the first network.

Correspondingly, in a technical solution in which Implementation 1 is combined with Implementation a, the message B includes the indication information K. In a technical solution in which Implementation 1 is combined with Implementation b, the message C, the message D, and the message E include the indication information K. In the technical solution of Implementation 2, the message D and the message E include the indication information K. It can be learned that the application server obtains the indication information K from the message B or the message E.

For the application server, after obtaining the indication information K, the application server may perform S421.

S421: The application server sends the first data to the terminal device based on the indication information K. Correspondingly, the terminal device receives the first data from the application server.

For example, the application server sends the first data to the terminal device via the user plane network element and the access network device. For details, refer to a related technology. Details are not described herein.

Optionally, when the indication information K includes the identifier 2, the application server determines, based on the identifier 2 in the indication information K, the first data that fails to be transmitted, and then sends the first data to the terminal device, to perform application layer retransmission.

It is easy to understand that, for the application server, when the application server performs S421, the application server no longer retransmits the first data based on a NACK of the terminal device. Specifically, based on the QUIC feedback mechanism in FIG. 3, the terminal device fails to receive the first data. Therefore, the terminal device still feeds back the NACK to the application server. Correspondingly, the application server receives the NACK from the terminal device. The NACK indicates that the transmission of the first data fails. The application server first performs S406 (S409 or S415). Therefore, when the application server performs S421 based on the indication information K, the application server no longer retransmits the first data based on the NACK of the terminal device, to avoid repeated transmission of same data, thereby helping save transmission resources.

It is easy to understand that, for the application server, after receiving the indication information K, the application server may alternatively not perform S421 or perform another processing step. This is not limited in this embodiment of this application.

In some embodiments, when the transmission of the first data fails, the first network further discards second data.

The first data is associated with the second data. For example, the first data corresponds to a data packet 1, and the second data corresponds to a data packet 2. Downlink transmission is used as an example. The terminal device needs to parse the data packet 2 based on data in the data packet 1. In this case, when the terminal device fails to receive the data packet 1, the terminal device cannot parse the data packet 2. When a network resource is limited, after determining that the transmission of the first data (for example, the data packet 1) fails, the first network discards the second data (for example, the data packet 2), to save the transmission resources.

A network element that discards the second data includes one of the following.

In a first item, the access network device discards the second data. In other words, after performing S404 (or S412), the access network device discards the second data. In this case, the notification of transmission failure and the indication information K further indicate that transmission of the second data to the terminal device through the first network fails.

In a second item, the user plane network element discards the second data. In other words, after performing S405 (or Step 2 in the related descriptions of S414), the user plane network element discards the second data. In this case, the indication information K further indicates that transmission of the second data to the terminal device through the first network fails.

It is easy to understand that the message B, the message C, the message D, and the message E include the indication information K. Therefore, the message B, the message C, the message D, and the message E separately indicate that the transmission of the second data to the terminal device through the first network fails.

Correspondingly, for the application server, after obtaining the indication information K, the application server may alternatively perform application layer retransmission of the second data. Specifically, the application server sends the second data to the terminal device based on the indication information K. Correspondingly, the terminal device receives the second data from the application server. For details, refer to the descriptions of S421. Details are not described herein again.

With reference to the communication method 400 in embodiments of this application, the foregoing describes the technical solutions of an application layer retransmission delay.

With reference to a communication method 500 in embodiments of this application, the following describes technical solutions for setting retransmission duration.

With reference to the feedback mechanism in FIG. 3, for data that is still not successfully transmitted after the transmission delay is exceeded, a 3GPP network (for example, an access network device in the 3GPP network, or a user plane network element in a core network in the 3GPP network) may further perform retransmission within specific retransmission duration.

However, there is no clear basis for setting the retransmission duration by the 3GPP network. If the retransmission duration is set inappropriately, the following problems may occur.

Problem 1: When the retransmission duration is set to be excessively short, there is a low probability that data retransmission succeeds, and a data transmission failure still occurs. An application layer of a transmitting device of the data cannot quickly sense the data transmission failure. As a result, a data transmission delay is high, and transmission efficiency is low.

Problem 2: When the retransmission duration is set to be excessively long, repeated data transmission may occur due to a feedback of the terminal device.

Specifically, when the retransmission duration is greater than Max_ack_delay, in an aspect, the 3GPP network (for example, the access network device in the 3GPP network or the user plane network element in the core network in the 3GPP network) retransmits data within the retransmission duration. In another aspect, if duration for waiting for receiving data by the terminal device has exceeded Max_ack_delay, a NACK is fed back to the application server. Correspondingly, the application server performs application layer retransmission based on the NACK. In this case, the 3GPP network and the application server transmit same data, resulting in a waste of transmission resources.

In conclusion, it can be learned that how to appropriately set the retransmission duration is an urgent technical problem to be resolved.

In view of this, an embodiment of this application provides a second communication method. The communication method may be applied to the communication system shown in FIG. 1 or FIG. 2a, in other words, an application server can communicate with a terminal device through a first network. In the communication method provided in this embodiment of this application, the application server sends a request message to a second network device (for example, a user plane network element) in the first network. The request message includes delay information. The delay information indicates a maximum delay between a client of the terminal device and the application server for acknowledging success or failure of data transmission. In this way, the first network obtains the delay information from the application server, and then determines retransmission duration based on the delay information. In other words, the application server provides a reference basis for determining the retransmission duration by the first network, so that the retransmission duration is more appropriate.

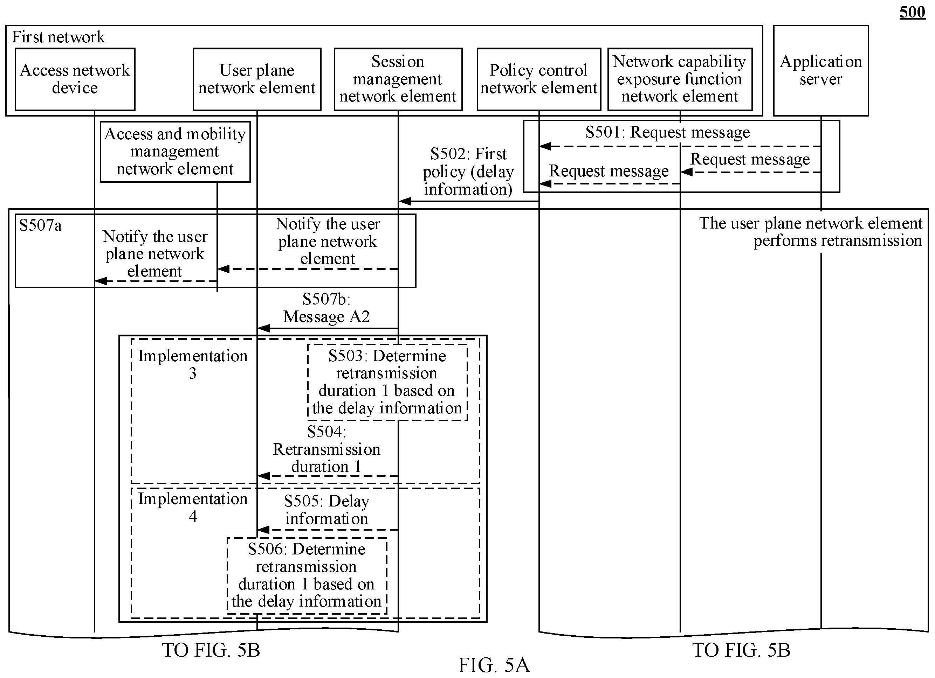

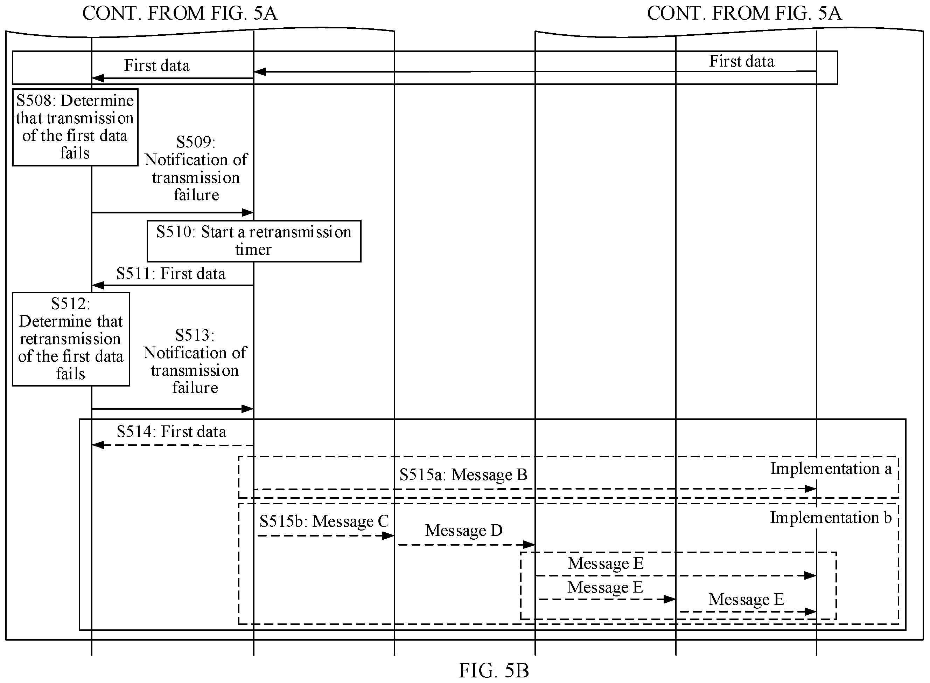

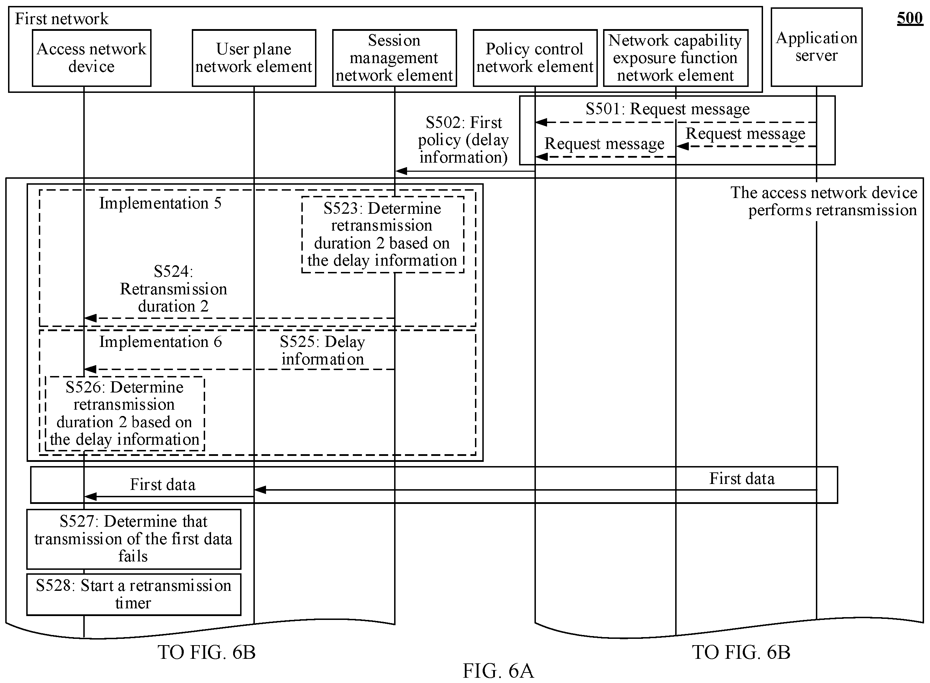

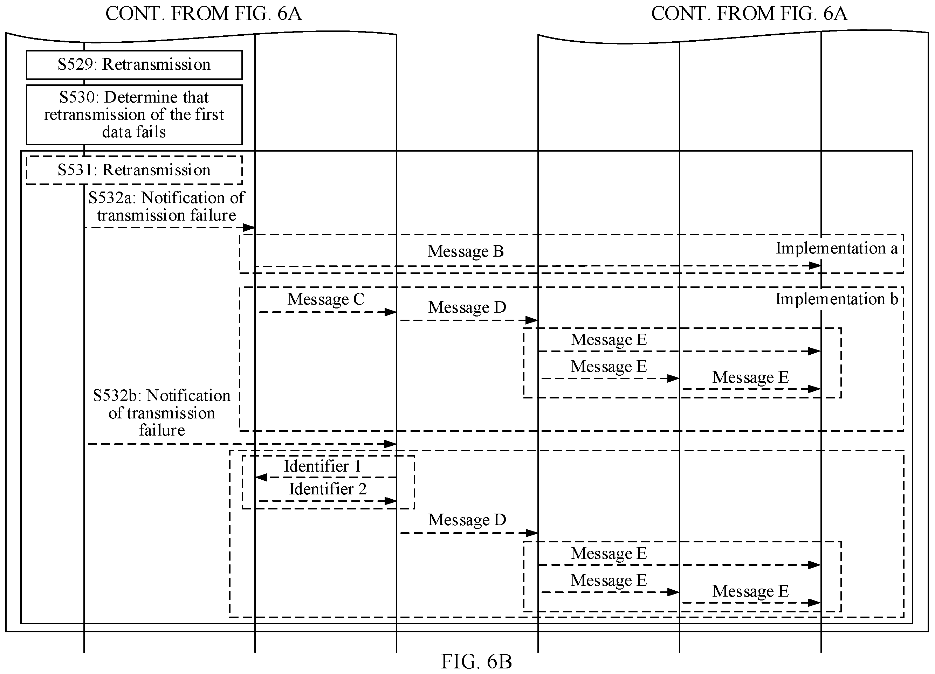

With reference to FIG. 5A and FIG. 5B and FIG. 6A and FIG. 6B, the following describes in detail a communication method provided in an embodiment of this application. The communication method 500 provided in this embodiment of this application includes the following steps.

S501: An application server sends a request message to a policy control network element. Correspondingly, the policy control network element receives the request message from the application server.

The request message is used to request a first network to notify the application server when the application server fails to transmit data to a terminal device through the first network.

The request message further includes delay information. The delay information indicates a maximum delay between a client of the terminal device and the application server for acknowledging success or failure of the data transmission. For example, the delay information is denoted as Max_ack_delay.

Optionally, the delay information may be understood as a maximum delay for sending feedback information to a peer end after an application layer or a transport layer receives the data, or Max_ack_delay within which feedback information is sent to a peer end after the data is received. The feedback information includes an ACK or a NACK.

It is easy to understand that, in this embodiment of this application, a meaning of Max_ack_delay complies with a definition in a QUIC-related standard defined by the internet engineering task force (internet engineering task force, IETF) standards organization, and is consistent with the definition in the QUIC-related standard, for example, RFC 9000 QUIC: A UDP-Based Multiplexed and Secure, and draft-ietf-quic-recovery-27: Transport QUIC Loss Detection and Congestion Control.

For the policy control network element, the policy control network element performs S502 after receiving the request message.

S502: The policy control network element sends a first policy to a session management network element. Correspondingly, the session management network element receives the first policy from the policy control network element.

The first policy is determined by the policy control network element based on the request message. Refer to the descriptions of S402. Details are not described herein again.

The first policy indicates the first network to notify the application server in a case that the application server fails to transmit the data to the terminal device through the first network. For details, refer to the descriptions of S402. Details are not described herein again.

The first policy further includes the delay information. For the delay information, refer to the descriptions of S501. Details are not described herein again.

It is easy to understand that the delay information may be a part of parameters in the first policy. For a transmission process, refer to the descriptions of S502. Certainly, when the first policy includes the delay information, the first policy and the delay information may also be transmitted by using different messages. Correspondingly, S502 may alternatively be replaced with the following: The policy control network element sends the first policy and the delay information to the session management network element. Correspondingly, the session management network element receives the first policy and the delay information from the policy control network element.

The following uses a case in which the first policy includes the delay information as an example for description.

For the session management network element, after the session management network element receives the delay information, when different devices in the first network perform retransmission, the session management network element has different implementations. Details are as follows.

Case 1: A user plane network element performs retransmission.

In this case, the session management network element may have the following two implementations (Implementation 3 and Implementation 4 in the following), so that the user plane network element learns of retransmission duration.

Implementation 3: The session management network element determines the retransmission duration based on the delay information, and the session management network element provides the retransmission duration for the user plane network element. For details, refer to descriptions of S503 and S504.

Implementation 4: The session management network element provides the delay information for the user plane network element, so that the user plane network element determines retransmission duration based on the delay information. For details, refer to descriptions of S505 and S506.

Case 2: An access network device performs retransmission.

In this case, the session management network element may have the following two implementations (Implementation 5 and Implementation 6 in the following), so that the access network device learns of retransmission duration.

Implementation 5: The session management network element determines the retransmission duration based on the delay information, and the session management network element provides the retransmission duration for the access network device. For details, refer to descriptions of S523 and S524.

Implementation 6: The session management network element provides the delay information for the access network device, so that the access network device determines the retransmission duration based on the delay information. For details, refer to descriptions of S525 and S526.

The following describes in detail Case 1 and Case 2 and Implementation 3 to Implementation 6.

Case 1: The user plane network element performs retransmission.

Implementation 3: After receiving the delay information, the session management network element performs S503 and S504.

S503: The session management network element determines retransmission duration 1 based on the delay information.

For the delay information in S503, refer to the descriptions of S501. Details are not described herein again.

The retransmission duration 1 indicates duration for performing retransmission when the user plane network element fails to transmit data to the terminal device within a preset delay requirement.

For example, the retransmission duration 1 is described in two manners (the following manner 1 and manner 2):
In the manner 1, the retransmission duration 1 is determined based on the following information.

A first item is a frame rate (frame rate). For example, a unit of the frame rate is frame per second (f/s, frame per second, FPS), to be specific, a quantity of frames of images generated by the application layer per second.

A second item is a PSDB. The PSDB indicates a delay requirement for data transmission. APDU defines an upper bound for a delay that a PDU set may experience for transfer between a terminal device and an N6 termination point at the user plane network element, that is, duration between reception time of a 1^{st} PDU (at an N6 termination point for downlink (downlink, DL) or a terminal device for uplink (uplink, UL)) and transferring time of a last PDU in the PDU set. For example, the PSDB is 10 ms, to be specific, a data packet set needs to be successfully transmitted between the terminal device and the user plane network element within 10 ms. If the data packet set is successfully transmitted within 10 ms, it is considered that a delay budget requirement is met. On the contrary, if the data packet set is not successfully transmitted between the terminal device and the user plane network element within 10 ms, it is considered that the delay budget requirement is not met. The PSDB may also be referred to as a data packet set delay budget, a data packet set delay budget, or the like. In this embodiment of this application, the PSDB is used as an example for description. In this embodiment of this application, meanings of the PDU set, the PDU set, the data packet set, and the data packet set are equivalent, and the four are interchangeable with each other. Unified descriptions are provided herein. Details are not described below again.

A third item is delay information. For the delay information, refer to the descriptions of S501. Details are not described herein again.

It is easy to understand that the frame rate and the PSDB are provided by the application server for the policy control network element, and then are provided by the policy control network element for the session management network element.

Specifically, the retransmission duration 1 is described by using Case a and Case b in the following.

Case a: Discarding associated data is not considered. In other words, when the user plane network element fails to transmit first data to the terminal device, the user plane network element does not discard second data. The first data is associated with the second data. For details, refer to the descriptions of the communication method 400. Details are not described herein again.

Case a-1: In a case of 1/FPS-DL_PSDB<Max_ack_delay, the retransmission duration 1 is within a range 1.

The range 1 is [1/FPS-DL_PSDB, 1/FPS-DL_PSDB+T_{UL}].

Alternatively, the range 1 is [I/FPS-DL_PSDB+T_{DL}, 1/FPS-DL_PSDB+T_{UL}+T_{DL}].

FPS represents a frame rate, DL_PSDB represents a downlink (downlink, DL) packet data unit delay budget, Max_ack_delay represents delay information, T_{UL} represents an uplink (uplink, UL) transmission delay, and T_{DL} represents a downlink transmission delay.

Case a-2: In a case of 1/FPS-DL_PSDB>Max_ack_delay, the retransmission duration 1 is within a range 2.

The range 2 is [Max_ack_delay, Max_ack_delay+T_{UL}].

Alternatively, the range 2 is [Max_ack_delay+T_{DL}, Max_ack_delay+T_{UL}+T_{DL}].

FPS represents a frame rate, DL_PSDB represents a downlink packet data unit delay budget, Max_ack_delay represents delay information, T_{UL} represents an uplink transmission delay, and T_{DL} represents a downlink transmission delay.

Case b: Discarding associated data is considered. In other words, when the user plane network element fails to transmit first data to the terminal device, the user plane network element discards second data. The first data is associated with the second data. For details, refer to the descriptions of the communication method 400. Details are not described herein again.

The retransmission duration 1 is within a range 2. For the range 2, refer to the descriptions of Case a-2. Details are not described herein again.

In the manner 2, the retransmission duration 1 may also be determined based on the following information.

A first item is a frame rate.

A second item is a PDB. The PDB indicates a delay requirement for data transmission. The PDB defines an upper bound for possible delay time of a data packet between a terminal device and an N6 termination point of the user plane network element. The PDB is applied to a downlink data packet received by the user plane network element through an N6 interface and an uplink data packet sent by the terminal device. For example, the PDB is 10 ms, to be specific, the data packet needs to be successfully transmitted between the terminal device and the user plane network element within 10 ms. If the data packet is successfully transmitted within 10 ms, it is considered that the delay budget requirement is met. On the contrary, if the data is not successfully transmitted between the terminal device and the user plane network element within 10 ms, it is considered that the delay budget requirement is met. The PDB may also be referred to as a data packet delay budget. In this embodiment of this application, the PDB is used as an example for description.

A third item is delay information. For the delay information, refer to the descriptions of S501. Details are not described herein again.

It is easy to understand that the frame rate and the PDB are provided by the application server for the policy control network element, and then are provided by the policy control network element for the session management network element.

Specifically, for the retransmission duration 1 in the manner 2, refer to the descriptions of the retransmission duration 1 in the manner 1. A difference lies in that the PSDB is replaced with the PDB. Details are not described herein again.

It is easy to understand that when the user plane network element performs retransmission, in the manner 1 and the manner 2, an uplink corresponding to T_{UL} includes a communication link between the terminal device and the user plane network element. A downlink corresponding to T_{DL} includes a communication link between the terminal device and the user plane network element.

S504: The session management network element sends the retransmission duration 1 to the user plane network element. Correspondingly, the user plane network element receives the retransmission duration 1 from the session management network element.

The retransmission duration 1 in S504 is consistent with the retransmission duration 1 in S503. Details are not described herein again.

Implementation 4: After receiving the delay information, the session management network element performs S505.

S505: The session management network element sends the delay information to the user plane network element. Correspondingly, the user plane network element receives the delay information from the session management network element.

For the delay information in S505, refer to the descriptions of S501. Details are not described herein again.

For the user plane network element, after receiving the delay information, the user plane network element performs S506.

S506: The user plane network element determines retransmission duration 1 based on the delay information.

For the delay information in S506, refer to the descriptions of S501. Details are not described herein again.

The retransmission duration 1 indicates duration for performing retransmission when the user plane network element fails to transmit data to the terminal device within a preset delay requirement. For details, refer to the descriptions of S503. Details are not described herein again.

For the session management network element, after receiving the first policy, the session management network element performs S507a and S507b.

S507a: The session management network element sends a message A1 to the access network device. Correspondingly, the access network device receives the message A1 from the session management network element.

The message A1 indicates the access network device to notify the user plane network element when the access network device fails to transmit data to the terminal device.

The message A1 is a message generated by the session management network element according to the first policy.

For an implementation process of S507a, refer to the descriptions of S403a. Details are not described herein again.

S507b: The session management network element sends a message A2 to the user plane network element. Correspondingly, the user plane network element receives the message A2 from the session management network element.

The message A2 indicates the user plane network element to send a message B to the application server when the user plane network element receives a notification of transmission failure from the access network device. The notification of transmission failure and the message B indicate that data transmission to the terminal device through the first network fails.

The message A2 is a message generated by the session management network element according to the first policy.

For an implementation process of S507b, refer to the descriptions of S403b. Details are not described herein again.

For the application server, after performing S501, the application server sends the first data to the terminal device through the first network. In a possible case, the application server successfully transmits the first data to the terminal device through the first network.

In another possible case, the application server fails to transmit the first data to the terminal device through the first network. In this case, the access network device performs S508 and S509.

S508: The access network device determines that transmission of the first data fails.

For an implementation process of S508, refer to the descriptions of S404. Details are not described herein again.

S509: The access network device sends the notification of transmission failure to the user plane network element. Correspondingly, the user plane network element receives the notification of transmission failure from the access network device.

The notification of transmission failure indicates that the transmission of the first data to the terminal device through the first network fails.

For an implementation process of S509, refer to the descriptions of S405. Details are not described herein again.

For the user plane network element, after receiving the notification of transmission failure for the first time, the user plane network element performs S510 and S511.

S510: The user plane network element starts a retransmission timer.

For example, when receiving the notification of transmission failure from the access network device for the first time, the user plane network element starts the retransmission timer.

Running duration of the retransmission timer is the retransmission duration 1.

S511: The user plane network element retransmits the first data to the access network device. Correspondingly, the access network device receives the first data retransmitted from the user plane network element.

It is easy to understand that, in a possible replacement manner, the user plane network element may alternatively not perform S511, but perform the following processing: The user plane network element sends a retransmission notification to the access network device. Correspondingly, the access network device receives the retransmission notification from the user plane network element. The retransmission notification indicates the access network device to retransmit the first data to the terminal device.

For the access network device, the access network device retransmits the first data to the terminal device. In a possible case, the access network device successfully retransmits the first data to the terminal device.

In another possible case, the access network device fails to retransmit the first data to the terminal device. In this case, the access network device performs S512 and S513.

S512: The access network device determines that the retransmission of the first data fails.

For an implementation process of S512, refer to the descriptions of S508. Details are not described herein again.

S513: The access network device sends the notification of transmission failure to the user plane network element. Correspondingly, the user plane network element receives the notification of transmission failure from the access network device.

The notification of transmission failure indicates that the transmission of the first data to the terminal device through the first network fails.

For the user plane network element, after receiving the notification of transmission failure not for the first time (for example, the user plane network element has performed S509), the user plane network element performs S514, S515a, or S515b.

S514: During running of the retransmission timer, the user plane network element retransmits the first data to the access network device. Correspondingly, the access network device receives the first data retransmitted from the user plane network element.

It is easy to understand that, in a possible replacement manner, the user plane network element may alternatively not perform S514, but perform the following processing: During running of the retransmission timer, the user plane network element sends the retransmission notification to the access network device. Correspondingly, the access network device receives the retransmission notification from the user plane network element. The retransmission notification indicates the access network device to retransmit the first data to the terminal device.

S515a: When running of the retransmission timer expires, the user plane network element sends the message B to the application server. Correspondingly, the application server receives the message B from the user plane network element.

For an implementation process of S515a, refer to the descriptions of S406. Details are not described herein again.

For the application server, after receiving the message B, the application server may perform application layer retransmission, to retransmit the first data. For details, refer to the descriptions of S421 in the communication method 400. Details are not described herein again.

S515b: When running of the retransmission timer expires, the user plane network element sends a message C to the session management network element. Correspondingly, the session management network element receives the message C from the user plane network element.

For an implementation process of S515b, refer to the descriptions of S407. Details are not described herein again.

For the session management network element, for a processing step after the session management network element receives the message C, refer to the descriptions of the message D, the message E, and the application layer retransmission (for example, S421) in the communication method 400. Details are not described herein again.

Case 2: The access network device performs retransmission (refer to FIG. 6A and FIG. 6B).

Implementation 5: After receiving the delay information, the session management network element performs S523 and S524.

S523: The session management network element determines retransmission duration 2 based on the delay information.

For the delay information in S523, refer to the descriptions of S501. Details are not described herein again.

The retransmission duration 2 indicates duration for performing retransmission when the access network device fails to transmit data to the terminal device within a preset delay requirement.

For example, the retransmission duration 2 is described in two manners (the following manner 3 and manner 4):
In the manner 3, the retransmission duration 2 is determined based on the following information.

A first item is a frame rate (frame rate).

A second item is a PSDB.

A third item is delay information.

Specifically, the retransmission duration 2 is described by using Case c and Case d in the following.

Case c: Discarding associated data is not considered. In other words, when the access network device fails to transmit first data to the terminal device, the access network device does not discard second data. The first data is associated with the second data. For details, refer to the descriptions of the communication method 400. Details are not described herein again.

Case c-1: In a case of 1/FPS-DL_PSDB<Max_ack_delay, the retransmission duration 2 is within a range 3.

The range 3 is [1/FPS-DL_PSDB, 1/FPS-DL_PDB+T_{UL}].

Alternatively, the range 3 is [1/FPS-DL_PSDB+T_{DL}, 1/FPS+DL_PDB+T_{UL}+T_{DL}].

FPS represents a frame rate, DL_PSDB represents a downlink packet data unit delay budget, Max_ack_delay represents delay information, T_{UL} represents an uplink transmission delay, and T_{DL} represents a downlink transmission delay.

Case c-2: In a case of 1/FPS-DL_PSDB>Max_ack_delay, the retransmission duration 2 is within a range 4.

The range 4 is [Max_ack_delay, Max_ack_delay+T_{UL}].

Alternatively, the range 4 is [Max_ack_delay+T_{DL}, Max_ack_delay+T_{UL}+T_{DL}].

FPS represents a frame rate, DL_PSDB represents a downlink packet data unit delay budget, Max_ack_delay represents delay information, T_{UL} represents an uplink transmission delay, and T_{DL} represents a downlink transmission delay.

Case b: Discarding associated data is considered. In other words, when the access network device fails to transmit first data to the terminal device, the access network device discards second data. The first data is associated with the second data. For details, refer to the descriptions of the communication method 400. Details are not described herein again.

The retransmission duration 2 is within the range 4. For the range 4, refer to the descriptions of Case c-2. Details are not described herein again.

In the manner 4, the retransmission duration 2 may also be determined based on the following information.

A first item is a frame rate.

A second item is a PDB.

A third item is delay information.

Specifically, for the retransmission duration 2 in the manner 4, refer to the descriptions of the retransmission duration 2 in the manner 3. A difference lies in that the PSDB is replaced with the PDB. Details are not described herein again.

It is easy to understand that when the access network device performs retransmission, in the manner 3 and the manner 4, an uplink corresponding to T_{UL} includes a communication link between the terminal device and the access network device. A downlink corresponding to T_{DL} includes a communication link between the terminal device and the access network device.

S524: The session management network element sends the retransmission duration 2 to the access network device. Correspondingly, the access network device receives the retransmission duration 2 from the session management network element.

The retransmission duration 2 in S524 is consistent with the retransmission duration 2 in S523. Details are not described herein again.

Implementation 6: After receiving the delay information, the session management network element performs S525.

S525: The session management network element sends the delay information to the access network device. Correspondingly, the access network device receives the delay information from the session management network element.

For the delay information in S525, refer to the descriptions of S501. Details are not described herein again.

For the access network device, after receiving the delay information, the access network device performs S526.

S526: The access network device determines retransmission duration 2 based on the delay information.

For the delay information in S526, refer to the descriptions of S501. Details are not described herein again.

The retransmission duration 2 indicates duration for performing retransmission when the access network device fails to transmit data to the terminal device within a preset delay requirement. For details, refer to the descriptions of S523. Details are not described herein again.

For the application server, after performing S501, the application server sends first data to the terminal device through the first network. In a possible case, the application server successfully transmits the first data to the terminal device through the first network.

In another possible case, the application server fails to transmit first data to the terminal device through the first network. In this case, the access network device performs S527.

S527: The access network device determines that the transmission of the first data fails.

For an implementation process of S527, refer to the descriptions of S508. Details are not described herein again.

For the access network device, after determining, for the first time, that the transmission of the first data fails, the access network device performs S528 and S529.

S528: The access network device starts a retransmission timer.

For example, the access network device starts the retransmission timer when determining, for the first time, that the transmission of the first data to the terminal device fails.

Running duration of the retransmission timer is the retransmission duration 2.

S529: The access network device retransmits the first data to the terminal device. Correspondingly, the terminal device receives the first data retransmitted from the access network device.

In a possible case, the access network device successfully retransmits the first data to the terminal device.

In another possible case, the access network device fails to retransmit the first data to the terminal device. In this case, the access network device performs S530.

S530: The access network device determines that the retransmission of the first data fails.

For an implementation process of S530, refer to the descriptions of S527. Details are not described herein again.

For the access network device, after determining that the retransmission of the first data fails, the access network device performs S531, S532a, or S532b.

S531: During running of the retransmission timer, the access network device retransmits the first data to the terminal device. Correspondingly, the terminal device receives the first data retransmitted from the access network device.

For an implementation process of S531, refer to the descriptions of S529. Details are not described herein again.

S532a: When running of the retransmission timer expires, the access network device sends a notification of transmission failure to the user plane network element. Correspondingly, the user plane network element receives the notification of transmission failure from the access network device.

For an implementation process of S532a, refer to the descriptions of S405. Details are not described herein again.

For the user plane network element, after receiving the notification of transmission failure, the user plane network element may notify the application server. For details, refer to the descriptions of Implementation a or Implementation b in the communication method 400. Details are not described herein again.

S532b: When running of the retransmission timer expires, the access network device sends a notification of transmission failure to the session management network element. Correspondingly, the session management network element receives the notification of transmission failure from the access network device.

For an implementation process of S532b, refer to the descriptions of S413. Details are not described herein again.

For the session management network element, after receiving the notification of transmission failure, the session management network element may notify the application server. For details, refer to the descriptions of Implementation 2 in the communication method 400. Details are not described herein again.

The foregoing describes, by using an example in which the first policy includes the delay information, the technical solution of setting the retransmission duration.

The following describes, by using an example in which the first policy includes the retransmission duration, the technical solution of setting the retransmission duration.

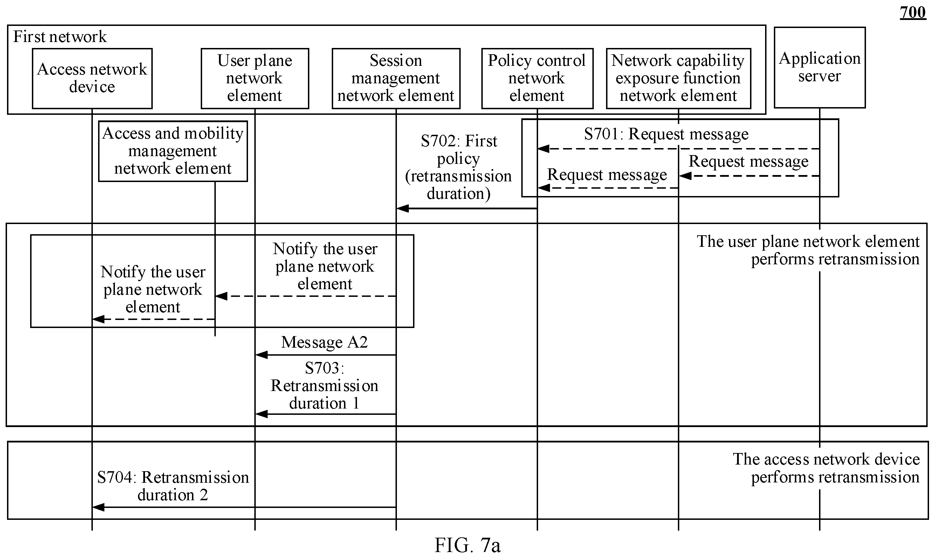

As shown in FIG. 7a, a communication method 700 provided in an embodiment of this application includes the following steps.

S701: An application server sends a request message to a policy control network element. Correspondingly, the policy control network element receives the request message from the application server.

For an implementation process of S701, refer to the descriptions of S501. Details are not described herein again.

S702: The policy control network element sends a first policy to a session management network element. Correspondingly, the session management network element receives the first policy from the policy control network element.

For an implementation process of S702, refer to the descriptions of S502. Details are not described herein again.

Different from the first policy in S502, the first policy in S702 does not include delay information, but includes retransmission duration.

The retransmission duration in the first policy in S702 is determined by the policy control network element based on the delay information.

Optionally, the retransmission duration includes retransmission duration 1, the retransmission duration includes retransmission duration 2, or the retransmission duration includes retransmission duration 3.

The retransmission duration 1 indicates duration for performing retransmission when a user plane network element fails to transmit data to a terminal device within a preset delay requirement. For details, refer to the descriptions of S503. When the retransmission duration includes the retransmission duration 1, the user plane network element performs retransmission. In other words, the policy control network element determines that the retransmission duration (that is, the retransmission duration 1) is configured for the user plane network element.

The retransmission duration 2 indicates duration for performing retransmission when an access network device fails to transmit data to the terminal device within the preset delay requirement. For details, refer to the descriptions of S523. When the retransmission duration includes the retransmission duration 2, the access network device performs retransmission. In other words, the policy control network element determines that the retransmission duration (that is, the retransmission duration 2) is configured for the access network device.

The retransmission duration 3 indicates duration for performing retransmission when a network device fails to transmit data to the terminal device within the preset delay requirement. In the retransmission duration 3, the network device may be an access network device, or may be a user plane network element. When the network device is an access network device, the retransmission duration 3 may be equivalent to the retransmission duration 2. When the network device is a user plane network element, the retransmission duration 3 may be equivalent to the retransmission duration 1. Further, the network device in the retransmission duration 3 may be determined by the session management network element. In other words, the policy control network element does not determine a specific network device for which the retransmission duration is configured, but the session management network element determines a specific network device for which the retransmission duration is configured.

It is easy to understand that the retransmission duration may be a part of parameters in the first policy. For a transmission process, refer to the descriptions of S702. Certainly, the first policy and the retransmission duration may alternatively be transmitted by using different messages. Correspondingly, S702 may alternatively be replaced with the following: The policy control network element sends the first policy and the retransmission duration to the session management network element. Correspondingly, the session management network element receives the first policy and the retransmission duration from the policy control network element.

For the session management network element, after the session management network element receives the delay information, when different devices in a first network perform retransmission, the session management network element has different implementations. Details are as follows.

Case 1: The user plane network element performs retransmission.

In this case, the session management network element performs S703.

S703: The session management network element sends the retransmission duration 1 to the user plane network element. Correspondingly, the user plane network element receives the retransmission duration 1 from the session management network element.

For an implementation process of S703, refer to the descriptions of S504. Details are not described herein again.

For the user plane network element, for a process in which, after the user plane network element receives the retransmission duration 1, when the data transmission fails, the user plane network element performs retransmission and notifies the application server that transmission of first data to the terminal device through the first network fails, refer to the descriptions of the communication method 500 in embodiments of this application. Details are not described herein again.

Case 2: The access network device performs retransmission.

In this case, the session management network element performs S704.

S704: The session management network element sends the retransmission duration 2 to the access network device. Correspondingly, the access network device receives the retransmission duration 2 from the session management network element.

For an implementation process of S704, refer to the descriptions of S524. Details are not described herein again.

For the access network device, for a process in which, after the access network device receives the retransmission duration 2, when the data transmission fails, the access network device performs retransmission and notifies the session management network element or the user plane network element, so that a core network notifies the application server that the transmission of first data to the terminal device through the first network fails, refer to the descriptions of the communication method 500 in embodiments of this application. Details are not described herein again.

It is easy to understand that, in the communication method 400, the communication method 500, and the communication method 700 in embodiments of this application, a PDU session establishment/modification process is used as an example for description, and should not be construed as a limitation on this application. Any modification, equivalent replacement, improvement, or the like that meets characteristics of the processing steps in embodiments of this application, that is, any modification, equivalent replacement, improvement, or the like made without departing from the spirit and principle of embodiments of this application shall fall within the protection scope of embodiments of this application.

The foregoing (the methods shown in FIG. 4A and FIG. 4B to FIG. 7a) describes, by using an example in which the request message includes the delay information, the technical solution of setting the retransmission duration.

The following describes, by using an example in which the request message includes the retransmission duration, the technical solution of setting the retransmission duration.

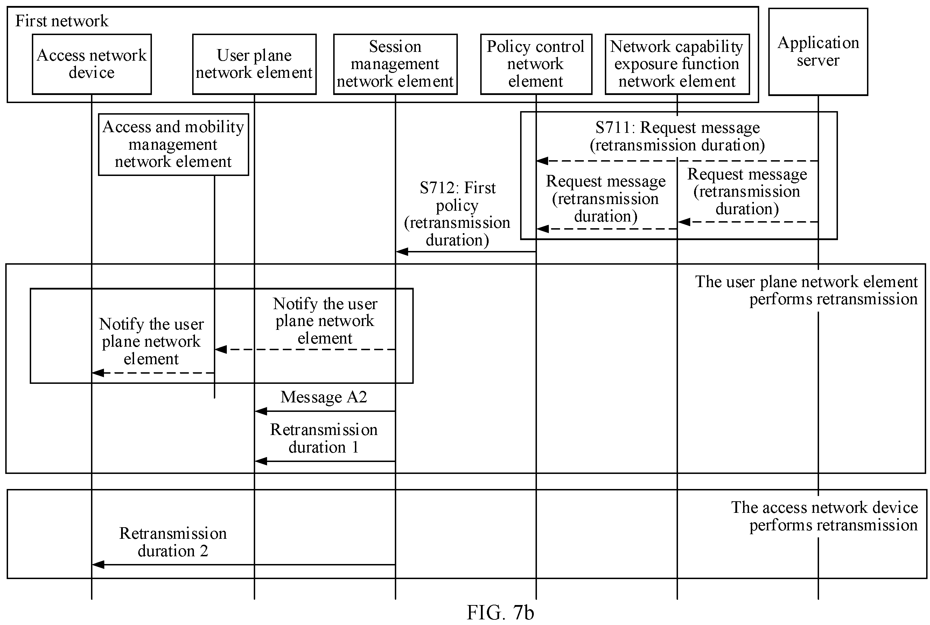

As shown in FIG. 7b, a communication method provided in an embodiment of this application includes the following steps.

S711: An application server sends a request message to a policy control network element. Correspondingly, the policy control network element receives the request message from the application server.

For an implementation process of S711, refer to the descriptions of S501. Details are not described herein again.

The request message includes retransmission duration.

The retransmission duration in the request message in S711 is determined by the application server based on delay information.

Optionally, the retransmission duration includes retransmission duration 1, the retransmission duration includes retransmission duration 2, or the retransmission duration includes retransmission duration 3. For the retransmission duration 1 to the retransmission duration 3, refer to the descriptions of S702. Details are not described herein again.

It is easy to understand that when the retransmission duration includes the retransmission duration 1, a user plane network element performs retransmission. In other words, the application server determines that the retransmission duration (that is, the retransmission duration 1) is configured for the user plane network element.

When the retransmission duration includes the retransmission duration 2, an access network device performs retransmission. In other words, the application server determines that the retransmission duration (that is, the retransmission duration 2) is configured for the access network device.

When the retransmission duration includes the retransmission duration 3, a network device may be an access network device, or may be a user plane network element. In other words, the application server does not determine a specific network device for which the retransmission duration is configured, but a session management network element (or the policy control network element) determines a specific network device for which the retransmission duration is configured.

S712: The policy control network element sends a first policy to the session management network element. Correspondingly, the session management network element receives the first policy from the policy control network element.

For an implementation process of S712, refer to the descriptions of S502. Details are not described herein again.

Different from the first policy in S502, the first policy in S712 does not include the delay information, but includes the retransmission duration.

For the session management network element, after the session management network element receives the retransmission duration, when different devices in a first network perform retransmission, the session management network element has different implementations. For details, refer to the descriptions of S703 and S704 in FIG. 7a. Details are not described herein again.

The foregoing describes, from a perspective of interaction between network elements, the solutions provided in embodiments of this application.

The following summarizes, from a perspective of a single network element, steps performed by each network element.

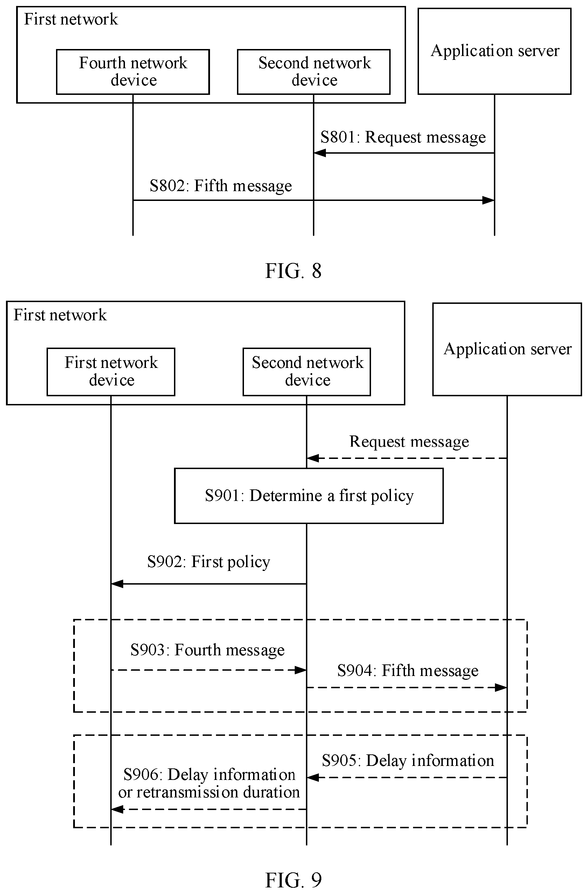

FIG. 8 shows another communication method according to an embodiment of this application. The method may be applied to the network architectures shown in FIG. 1 and FIG. 2a, and is specifically for implementing the communication method corresponding to FIG. 4A and FIG. 4B. The method is applied to an application server. The application server communicates with a terminal device through a first network.

As shown in FIG. 8, the method includes the following steps.

S801: The application server sends a request message to a second network device in the first network.

The request message is used to request the first network to notify the application server in a case that the application server fails to transmit data to the terminal device through the first network.

For example, when the method shown in FIG. 8 is specifically applied to the method shown in FIG. 4A and FIG. 4B, the second network device includes one of the following: a policy control network element or a network capability exposure function network element. For a specific implementation process of S801, refer to related descriptions of S401. Details are not described herein again.

S802: The application server receives a fifth message from a fourth network device in the first network.

The fifth message indicates that transmission of first data to the terminal device through the first network fails.

For example, when the method shown in FIG. 8 is specifically applied to the method shown in FIG. 4A and FIG. 4B, the fourth network device includes one of the following: a user plane network element, a policy control network element, or a network capability exposure function network element.

When the fourth network device includes the user plane network element, the fifth message is a message B. For a specific implementation process of S802, refer to the related descriptions of S406. Details are not described herein again.

When the fourth network device includes the policy control network element or the network capability exposure function network element, the fifth message is a message E. For a specific implementation process of S802, refer to the related descriptions of S409 and S415. Details are not described herein again.

In some embodiments, the fifth message includes a first identifier indicative of the first data.

When the method shown in FIG. 8 is specifically applied to the method shown in FIG. 4A and FIG. 4B, the first identifier may be an identifier 2. For details, refer to the related descriptions of the identifier 2. Details are not described herein again.

FIG. 9 shows another communication method according to an embodiment of this application. The method may be applied to the network architectures shown in FIG. 1 and FIG. 2a, and is specifically for implementing the communication method corresponding to FIG. 4A and FIG. 4B. The method is applied to a second network device in a first network, and the first network is used for communication between an application server and a terminal device.

As shown in FIG. 9, the method includes the following steps.

S901: The second network device determines a first policy.

The first policy indicates the first network to notify the application server in a case that the application server fails to transmit data to the terminal device through the first network.

In some embodiments, an implementation process of S901 includes: The second network device receives a request message from the application server, and determines the first policy based on the request message. The request message is used to request the first network to notify the application server in a case that the application server fails to transmit the data to the terminal device through the first network.

For example, when the method shown in FIG. 9 is specifically applied to the method shown in FIG. 4A and FIG. 4B, the second network device is a policy control network element. For a specific implementation process of S901, refer to the related descriptions of S401 and S402. Details are not described herein again.

S902: The second network device sends the first policy to a first network device in the first network.

For example, when the method shown in FIG. 9 is specifically applied to the method shown in FIG. 4A and FIG. 4B, the second network device is a policy control network element, and the first network device is a session management network element. For a specific implementation process of S902, refer to the related descriptions of S402. Details are not described herein again.

In some embodiments, after the second network device performs S902, the method further includes S903 and S904.

S903: The second network device receives a fourth message from the first network device.

The fourth message indicates that transmission of first data to the terminal device through the first network fails.

For example, when the method shown in FIG. 9 is specifically applied to the method shown in FIG. 4A and FIG. 4B, the second network device is a policy control network element, the first network device is a session management network element, and the fourth message is a message D. For a specific implementation process of S903, refer to the related descriptions of S408 and S414. Details are not described herein again.

S904: The second network device sends a fifth message to the application server.

The fifth message indicates that the transmission of the first data to the terminal device through the first network fails.

For example, when the method shown in FIG. 9 is specifically applied to the method shown in FIG. 4A and FIG. 4B, the second network device is a policy control network element, and the fifth message is a message E. For a specific implementation process of S904, refer to the related descriptions of S409 and S415. Details are not described herein again.

Optionally, at least one of the fourth message or the fifth message includes a first identifier indicative of the first data.

For example, when the method shown in FIG. 9 is specifically applied to the method shown in FIG. 4A and FIG. 4B, the first identifier is an identifier 2. For details, refer to the related descriptions of the identifier 2. Details are not described herein again.

In some embodiments, the method further includes S905 and S906.

S905: The second network device receives delay information from the application server.

The delay information indicates a maximum delay between a client of the terminal device and the application server for acknowledging success or failure of the data transmission.

For example, when the method shown in FIG. 9 is specifically applied to the method shown in FIG. 5A and FIG. 5B, the second network device is a policy control network element. For a specific implementation process of S905, refer to the related descriptions of S501. Details are not described herein again.

S906: The second network device sends the delay information or retransmission duration to the first network device.

For example, the second network device is a policy control network element, and the first network device is a session management network element.

When the delay information is transmitted in S906, for example, when the method shown in FIG. 9 is specifically applied to the method shown in FIG. 5A and FIG. 5B, for a specific implementation process of S906, refer to the related descriptions of S502. Details are not described herein again.

When the retransmission duration is transmitted in S906, the retransmission duration indicates duration for performing retransmission when a fourth network device or a third network device fails to transmit data to the terminal device within a preset delay requirement. The retransmission duration is determined by the second network device based on the delay information. For example, when the method shown in FIG. 9 is specifically applied to the method shown in FIG. 7a, for a specific implementation process of S906, refer to the related descriptions of S702. Details are not described herein again.

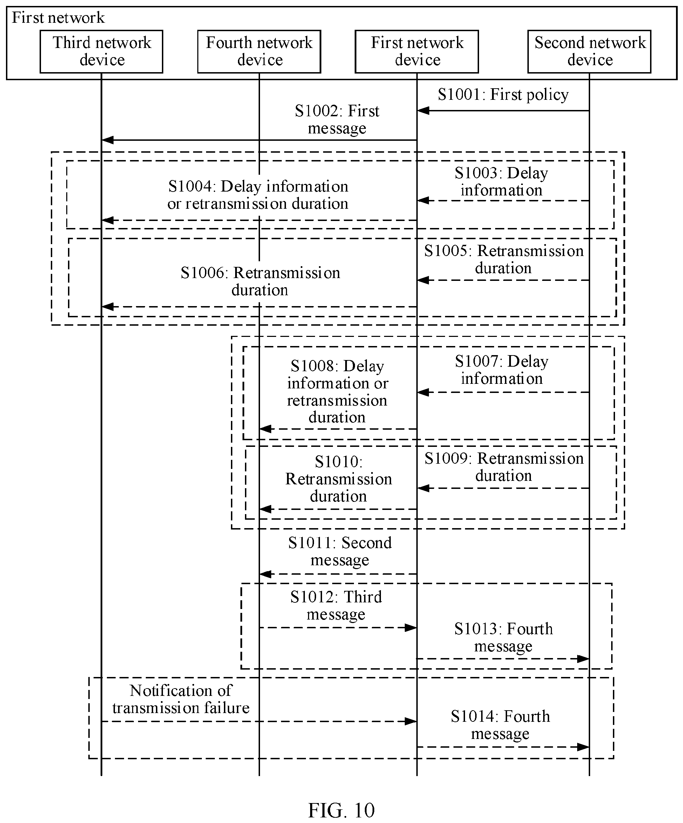

FIG. 10 shows another communication method according to an embodiment of this application. The method may be applied to the network architectures shown in FIG. 1 and FIG. 2a, and is specifically for implementing the communication method corresponding to FIG. 4A and FIG. 4B. The method is applied to a first network device in a first network, and the first network is used for communication between an application server and a terminal device.

As shown in FIG. 10, the method includes the following steps.

S1001: The first network device receives a first policy from a second network device in the first network.

The first policy indicates the first network to notify the application server in a case that the application server fails to transmit data to the terminal device through the first network.

For example, when the method shown in FIG. 10 is specifically applied to the method shown in FIG. 4A and FIG. 4B, the first network device is a session management network element, and the second network device is a policy control network element. For a specific implementation process of S1001, refer to the related descriptions of S402. Details are not described herein again.

S1002: The first network device sends a first message to a third network device in the first network.

The first message indicates the third network device to notify a fourth network device or the first network device when the application server fails to transmit the data to the terminal device through first network.

The first message is a message generated by the first network device according to the first policy.

For example, when the method shown in FIG. 10 is specifically applied to the method shown in FIG. 4A and FIG. 4B, the first network device is a session management network element, the third network device is an access network device, and the first message is a message A1. For a specific implementation process of S1002, refer to the related descriptions of S403a. Details are not described herein again.

In some embodiments, S1002 includes: sending the first message to the third network device via a fifth network device in the first network.

For example, when the method shown in FIG. 10 is specifically applied to the method shown in FIG. 4A and FIG. 4B, the fifth network device is an access and mobility management network element, and the first message is a message a2. For a specific implementation process, refer to the related descriptions of S403a-1 and S403a-2. Details are not described herein again.

In some embodiments, the method further includes S1003 and S1004.

S1003: The first network device receives delay information from the second network device.

The delay information indicates a maximum delay between a client of the terminal device and the application server for acknowledging success or failure of the data transmission.

For example, when the method shown in FIG. 10 is specifically applied to the method shown in FIG. 5A and FIG. 5B, the first network device is a session management network element, and the second network device is a policy control network element. For a specific implementation process of S1003, refer to the related descriptions of S502. Details are not described herein again.

S1004: The first network device sends retransmission duration or the delay information to the third network device.

The retransmission duration indicates duration for performing retransmission in a case that the third network device fails to transmit data to the terminal device within a preset delay requirement, and the retransmission duration is determined by the first network device based on the delay information.

For example, when the method shown in FIG. 10 is specifically applied to the method shown in FIG. 5A and FIG. 5B, the first network device is a session management network element, and the third network device is an access network device. For a specific implementation process of S1004, refer to the related descriptions of S524 or S525. Details are not described herein again.

In some embodiments, the method further includes S1005 and S1006.

S1005: The first network device receives retransmission duration from the second network device.

The retransmission duration indicates duration for performing retransmission in a case that the third network device fails to transmit data to the terminal device within a preset delay requirement.

For example, when the method shown in FIG. 10 is specifically applied to the method shown in FIG. 7a, the first network device is a session management network element, and the second network device is a policy control network element. For a specific implementation process of S1005, refer to the related descriptions of S702. Details are not described herein again.

S1006: The first network device sends the retransmission duration to the third network device.

For example, when the method shown in FIG. 10 is specifically applied to the method shown in FIG. 7a, the first network device is a session management network element, and the third network device is an access network device. For a specific implementation process of S1006, refer to the related descriptions of S704. Details are not described herein again.

In some embodiments, when the first message indicates the third network device to notify the fourth network device in a case that the application server fails to transmit the data to the terminal device through the first network, the method further includes S1007 and S1008.

S1007: The first network device receives delay information from the second network device.

The delay information indicates a maximum delay between a client of the terminal device and the application server for acknowledging success or failure of data transmission.

For example, when the method shown in FIG. 10 is specifically applied to the method shown in FIG. 5A and FIG. 5B, the first network device is a session management network element, and the second network device is a policy control network element. For a specific implementation process of S1007, refer to the related descriptions of S502. Details are not described herein again.

S1008: The first network device sends retransmission duration or the delay information to the fourth network device.

The retransmission duration indicates duration for performing retransmission in a case that the fourth network device fails to transmit data to the terminal device within a preset delay requirement, and the retransmission duration is determined by the first network device based on the delay information.

For example, when the method shown in FIG. 10 is specifically applied to the method shown in FIG. 5A and FIG. 5B, the first network device is a session management network element, and the fourth network device is a user plane network element. For a specific implementation process of S1008, refer to the related descriptions of S504 or S505. Details are not described herein again.

In some embodiments, the method further includes S1009 and S1010.

S1009: The first network device receives retransmission duration from the second network device.

The retransmission duration indicates duration for performing retransmission in a case that the fourth network device fails to transmit data to the terminal device within a preset delay requirement

For example, when the method shown in FIG. 10 is specifically applied to the method shown in FIG. 7a, the first network device is a session management network element, and the second network device is a policy control network element. For a specific implementation process of S1009, refer to the related descriptions of S702. Details are not described herein again.

S1010: The first network device sends the retransmission duration to the fourth network device.

For example, when the method shown in FIG. 10 is specifically applied to the method shown in FIG. 7a, the first network device is a session management network element, and the fourth network device is a user plane network element. For a specific implementation process of S1010, refer to the related descriptions of S703. Details are not described herein again.

In some embodiments, when the first message indicates the third network device to notify the fourth network device in a case that the application server fails to transmit the data to the terminal device through the first network, after S1001, the method further includes S1011.

S1011: The first network device sends a second message to the fourth network device.

The second message indicates the fourth network device to notify, when the fourth network device receives a notification of transmission failure from the third network device, the application server that the data transmission to the terminal device through the first network fails.

The second message is a message determined by the first network device according to the first policy.

For example, when the method shown in FIG. 10 is specifically applied to the method shown in FIG. 4A and FIG. 4B, the first network device is a session management network element, the fourth network device is a user plane network element, and the second message is a message A2. For a specific implementation process of S1011, refer to the related descriptions of S403b. Details are not described herein again.

In some embodiments, when the first message indicates the third network device to notify the fourth network device in a case that the application server fails to transmit the data to the terminal device through the first network, after S1001, the method further includes S1012 and S1013.

S1012: The first network device receives a third message from the fourth network device.

The third message indicates that transmission of first data to the terminal device through the first network fails.

For example, when the method shown in FIG. 10 is specifically applied to the method shown in FIG. 4A and FIG. 4B, the first network device is a session management network element, the fourth network device is a user plane network element, and the third message is a message C. For a specific implementation process of S1012, refer to the related descriptions of S407. Details are not described herein again.

S1013: The first network device sends a fourth message to the second network device.

The fourth message indicates that the transmission of the first data to the terminal device through the first network fails.

For example, when the method shown in FIG. 10 is specifically applied to the method shown in FIG. 4A and FIG. 4B, the first network device is a session management network element, the second network device is a policy control network element, and the fourth message is a message D. For a specific implementation process of S1013, refer to the related descriptions of S408. Details are not described herein again.

Optionally, at least one of the third message or the fourth message includes a first identifier indicative of the first data.

For example, when the method shown in FIG. 10 is specifically applied to the method shown in FIG. 4A and FIG. 4B, the first identifier is an identifier 2. For details, refer to the related descriptions of the identifier 2. Details are not described herein again.

In some embodiments, when the first message indicates the third network device to notify the first network device in a case that the application server fails to transmit the data to the terminal device through the first network, after S1001, the method further includes S1014.

S1014: When receiving a notification of transmission failure from the third network device, the first network device sends a fourth message to the second network device.

The notification of transmission failure and the fourth message indicate that the transmission of the first data to the terminal device through the first network fails.

For example, when the method shown in FIG. 10 is specifically applied to the method shown in FIG. 4A and FIG. 4B, the first network device is a session management network element, the third network device is an access network device, the second network device is a policy control network element, and the fourth message is a message D. For a specific implementation process of S1014, refer to the related descriptions of S413 and S414. Details are not described herein again.

Optionally, the notification of transmission failure includes a second identifier, and the second identifier indicates the first data.

For example, when the method shown in FIG. 10 is specifically applied to the method shown in FIG. 4A and FIG. 4B, the second identifier is an identifier 1. For details, refer to the related descriptions of the identifier 1. Details are not described herein again.

Optionally, the fourth message includes a first identifier indicative of the first data.

For example, when the method shown in FIG. 10 is specifically applied to the method shown in FIG. 4A and FIG. 4B, the first identifier is an identifier 2. For details, refer to the related descriptions of the identifier 2. Details are not described herein again.

In some embodiments, when the first identifier includes a GTP SN of an interface between the fourth network device and the application server, and the fourth network device is a user plane network element, after the notification of transmission failure is received from the third network device, and before the fourth message is sent to the second network device, the method further includes:

The first network device sends the second identifier to the fourth network device, and then receives the first identifier from the fourth network device. The first identifier is determined by the fourth network device based on the first identifier.

For example, when the method shown in FIG. 10 is specifically applied to the method shown in FIG. 4A and FIG. 4B, the first network device is a session management network element, and the fourth network device is a user plane network element. For a specific implementation process of this step, refer to the related descriptions of S414. Details are not described herein again.

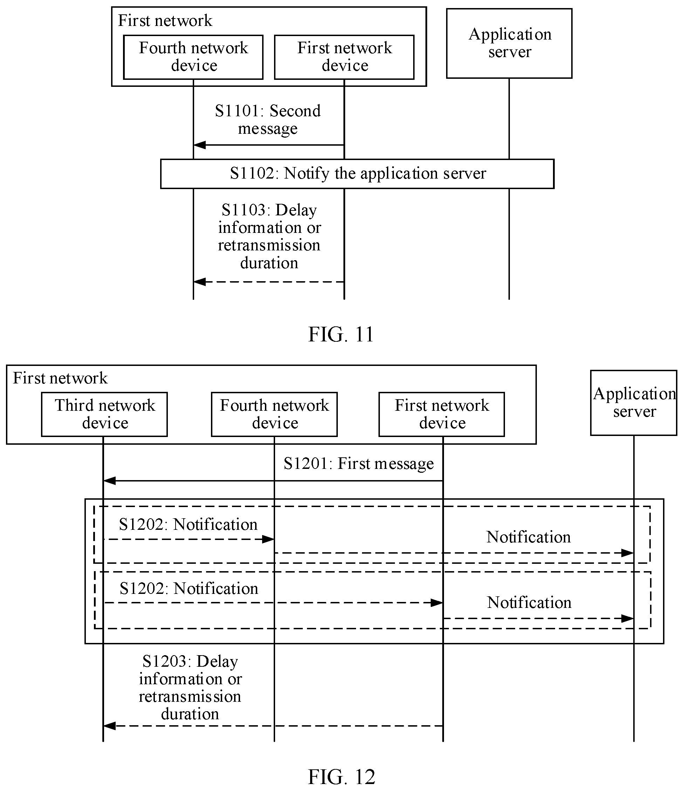

FIG. 11 shows another communication method according to an embodiment of this application. The method may be applied to the network architectures shown in FIG. 1 and FIG. 2a, and is specifically for implementing the communication method corresponding to FIG. 4A and FIG. 4B. The method is applied to a fourth network device in a first network, and the first network is used for communication between an application server and a terminal device.

As shown in FIG. 11, the method includes the following steps.

S1101: The fourth network device receives a second message from a first network device in the first network.

The second message indicates the fourth network device to notify, in a case that the fourth network device receives a notification of transmission failure from a third network device in the first network, the application server that transmission of first data to the terminal device through the first network fails.

For example, when the method shown in FIG. 11 is specifically applied to the method shown in FIG. 4A and FIG. 4B, the fourth network device is a user plane network element, the first network device is a session management network element, the third network device is an access network device, and the second message is a message A2. For a specific implementation process of this step, refer to the related descriptions of S403b. Details are not described herein again.

S1102: The fourth network device notifies the application server based on the second message in the case of receiving the notification of transmission failure.

For example, when the method shown in FIG. 11 is specifically applied to the method shown in FIG. 4A and FIG. 4B, the fourth network device is a user plane network element, and the second message is a message A2. For a specific implementation process of this step, refer to the related descriptions of S406. Details are not described herein again.

In some embodiments, before the application server is notified based on the second message, the method further includes S1103.

S1103: The fourth network device receives retransmission duration or delay information from the first network device.

The delay information indicates a maximum delay between a client of the terminal device and the application server for acknowledging success or failure of data transmission, and the delay information is used by the fourth network device to determine the retransmission duration.

The retransmission duration indicates duration for performing retransmission in a case that the fourth network device fails to transmit data to the terminal device within a preset delay requirement.

For example, when the method shown in FIG. 11 is specifically applied to the method shown in FIG. 4A and FIG. 4B, the fourth network device is a user plane network element, and the first network device is a session management network element.

When the retransmission duration is transmitted in S1103, for a specific implementation process of this step, refer to the related descriptions of S504. Details are not described herein again.

When the delay information is transmitted in S1103, for a specific implementation process of this step, refer to the related descriptions of S505. Details are not described herein again.

In some embodiments, after S1103 is performed, S1101 includes:
The fourth network device starts a retransmission timer in a case of receiving the notification of transmission failure for the first time. For details, refer to the descriptions of S509 and S510. Details are not described herein again.

The fourth network device retransmits the first data during running of the retransmission timer. For details, refer to the descriptions of S511. Details are not described herein again.

The fourth network device notifies the application server based on the second message when the fourth network device receives the notification of transmission failure again and running of the retransmission timer expires. Running duration of the retransmission timer is the retransmission duration. For details, refer to the descriptions of S513 and S515a. Details are not described herein again.

In some embodiments, S1102 includes:
The fourth network device sends a fifth message to the application server based on the second message in the case of receiving the notification of transmission failure, where the fifth message indicates that the transmission of the first data to the terminal device through first network fails.

For example, when the method shown in FIG. 11 is specifically applied to the method shown in FIG. 4A and FIG. 4B, the fourth network device is a user plane network element, and the second message is a message A2. For a specific implementation process of this step, refer to the related descriptions of S513 and the message B. Details are not described herein again.

In some embodiments, S1102 includes:
The fourth network device sends a notification message to the application server based on the second message through the first network device and a second network device in the first network in the case of receiving the notification of transmission failure, where the notification message indicates that the transmission of the first data to the terminal device through the first network fails.

For example, when the method shown in FIG. 11 is specifically applied to the method shown in FIG. 4A and FIG. 4B, the fourth network device is a user plane network element, the first network device is a session management network element, the second network device is a policy control network element, and the notification message includes a message C, a message D, and a message E. For a specific implementation process of this step, refer to the related descriptions of Implementation b in FIG. 5A and FIG. 5B. Details are not described herein again.

Optionally, the fifth message includes a first identifier indicative of the first data.

For example, when the method shown in FIG. 11 is specifically applied to the method shown in FIG. 4A and FIG. 4B, the first identifier is an identifier 2. Details are not described herein again.

Optionally, the notification message includes the first identifier indicative of the first data.

For example, when the method shown in FIG. 11 is specifically applied to the method shown in FIG. 4A and FIG. 4B, the first identifier is an identifier 2. Details are not described herein again.

In some embodiments, the notification of transmission failure and the fifth message further indicate that transmission of second data to the terminal device through the first network fails. The second data is associated with the first data, and is discarded by the third network device.

For example, when the method shown in FIG. 11 is specifically applied to the method shown in FIG. 4A and FIG. 4B, the third network device is an access network device, and the fifth message is a message B. Details are not described herein again.

In some embodiments, the notification of transmission failure and the notification message further indicate that the transmission of the second data to the terminal device through the first network fails. The second data is associated with the first data, and is discarded by the third network device.

For example, when the method shown in FIG. 11 is specifically applied to the method shown in FIG. 4A and FIG. 4B, the third network device is an access network device, and the notification message includes a message C, a message D, and a message E. Details are not described herein again.

In some embodiments, the fifth message further indicates that the transmission of the second data to the terminal device through the first network fails. The second data is associated with the first data, and is discarded by the fourth network device.

For example, when the method shown in FIG. 11 is specifically applied to the method shown in FIG. 4A and FIG. 4B, the fourth network device is a user plane network element, and the fifth message is a message B. Details are not described herein again.

In some embodiments, the notification message further indicates that the transmission of the second data to the terminal device through the first network fails. The second data is associated with the first data, and is discarded by the fourth network device.

For example, when the method shown in FIG. 11 is specifically applied to the method shown in FIG. 4A and FIG. 4B, the fourth network device is a user plane network element, and the notification message includes a message C, a message D, and a message E. Details are not described herein again.

FIG. 12 shows another communication method according to an embodiment of this application. The method may be applied to the network architectures shown in FIG. 1 and FIG. 2a, and is specifically for implementing the communication method corresponding to FIG. 4A and FIG. 4B. The method is applied to a third network device in a first network, and the first network is used for communication between an application server and a terminal device.

As shown in FIG. 12, the method includes the following steps.

S1201: The third network device receives a first message from a first network device in the first network.

The first message indicates the third network device to notify a fourth network device or the first network device in the first network in a case that the third network device fails to transmit data to the terminal device.

For example, when the method shown in FIG. 12 is specifically applied to the method shown in FIG. 4A and FIG. 4B, the third network device is an access network device, the first network device is a session management network element, the fourth network device is a user plane network element, and the first message is a message A1. For a specific implementation process of this step, refer to the related descriptions of S403a. Details are not described herein again.

S1202: The third network device sends, in the case that transmission of first data to the terminal device fails, a notification of transmission failure to a network device indicated by the first message.

The notification of transmission failure indicates that the transmission of the first data to the terminal device through the first network fails.

For example, when the method shown in FIG. 12 is specifically applied to the method shown in FIG. 4A and FIG. 4B, the third network device is an access network device, and the network device indicated by the first message includes a session management network element or a user plane network element.

When the network device indicated by the first message is the session management network element, for a specific implementation process of this step, refer to the related descriptions of S413. Details are not described herein again.

When the network device indicated by the first message is the user plane network element, for a specific implementation process of this step, refer to the related descriptions of S405. Details are not described herein again.

In some embodiments, the method further includes S1203.

S1203: The third network device receives retransmission duration or delay information from the first network device.

The delay information indicates a maximum delay between a client of the terminal device and the application server for acknowledging success or failure of data transmission, and the delay information is used by the third network device to determine the retransmission duration.

The retransmission duration indicates duration for performing retransmission in the case that the third network device fails to transmit the data to the terminal device within a preset delay requirement.

For example, when the method shown in FIG. 12 is specifically applied to the method shown in FIG. 6A and FIG. 6B, the third network device is an access network device, and the first network device is a session management network element. For a specific implementation process of this step, refer to the related descriptions of S524 or S525. Details are not described herein again.

In some embodiments, after S1203 is performed, S1202 includes:
The third network device starts a retransmission timer in the case that the transmission of the first data to the terminal device fails for the first time. For details, refer to the descriptions of S527 and S528. Details are not described herein again.

The third network device retransmits the first data during running of the retransmission timer. For details, refer to the descriptions of S529. Details are not described herein again.

The third network device sends, when the transmission of the first data to the terminal device fails again and running of the retransmission timer expires, the notification of transmission failure to the network device indicated by the first message. For details, refer to the descriptions of S532a. Details are not described herein again.

In some embodiments, the notification of transmission failure further indicates that transmission of second data to the terminal device through the first network fails. The second data is associated with the first data, and is discarded by the third network device.

For example, when the method shown in FIG. 12 is specifically applied to the method shown in FIG. 4A and FIG. 4B, the third network device is an access network device. Details are not described herein again.

The foregoing mainly describes, from the perspective of interaction between network elements, the solutions provided in embodiments of this application. Correspondingly, an embodiment of this application further provides a communication apparatus. The communication apparatus may be the network element in the foregoing method embodiment, an apparatus including the foregoing network element, or a component that can be used in the network element. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

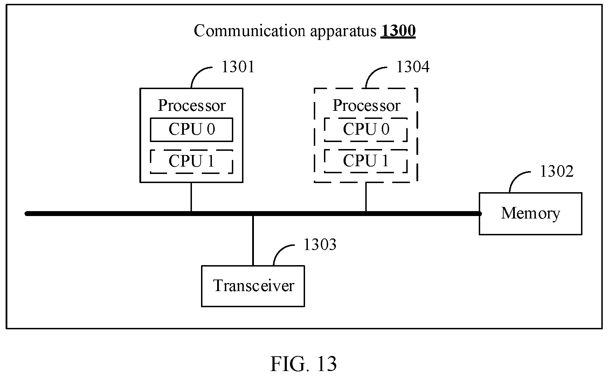

For example, FIG. 13 is a diagram of a structure of a communication apparatus according to an embodiment of this application.

The communication apparatus may be an application server, or may be a chip (system) or another component or assembly that may be disposed in the application server.

Alternatively, the communication apparatus may be a first network device (for example, a session management network element), or may be a chip (system) or another component or assembly that may be disposed in the first network device.

Alternatively, the communication apparatus may be a second network device (for example, a policy control network element), or may be a chip (system) or another component or assembly that may be disposed in the second network device.

Alternatively, the communication apparatus may be a third network device (for example, an access network device), or may be a chip (system) or another component or assembly that may be disposed in the third network device.

Alternatively, the communication apparatus may be a fourth network device (for example, a user plane network element), or may be a chip (system) or another component or assembly that may be disposed in the fourth network device.

As shown in FIG. 13, the communication apparatus 1300 may include a processor 1301. Optionally, the communication apparatus 1300 may further include a memory 1302 and/or a transceiver 1303. The processor 1301 is coupled to the memory 1302 and the transceiver 1303, for example, may be connected to the memory 1302 and the transceiver 1303 through a communication bus.

The following specifically describes each component of the communication apparatus 1300 with reference to FIG. 13.

The processor 1301 is a control center of the communication apparatus 1300, and may be one processor, or may be a collective term of a plurality of processing elements. For example, the processor 1301 is one or more central processing units (central processing units, CPUs), and may be an application-specific integrated circuit (application-specific integrated circuit, ASIC) or one or more integrated circuits configured to implement embodiments of this application, for example, one or more digital signal processors (digital signal processors, DSPs) or one or more field programmable gate arrays (field programmable gate arrays, FPGAs).

Optionally, the processor 1301 may perform various functions of the communication apparatus 1300 by running or executing a software program stored in the memory 1302 and invoking data stored in the memory 1302.

During specific implementation, in an embodiment, the processor 1301 may include one or more CPUs, such as a CPU 0 and a CPU 1 shown in FIG. 13.

During specific implementation, in an embodiment, the communication apparatus 1300 may alternatively include a plurality of processors, for example, the processor 1301 and a processor 1304 shown in FIG. 13. Each of the processors may be one single-core processor (single-CPU), or may be one multi-core processor (multi-CPU). The processor herein may be one or more devices, circuits, and/or processing cores configured to process data (for example, computer program instructions).

The memory 1302 is configured to store the software program for executing the solutions in this application, and the processor 1301 controls execution. For a specific implementation, refer to the foregoing method embodiments. Details are not described herein again.

Optionally, the memory 1302 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer, but is not limited thereto. The memory 1302 may be integrated with the processor 1301, or may exist independently, and is coupled to the processor 1301 through an interface circuit (not shown in FIG. 13) of the communication apparatus 1300. This is not specifically limited in this embodiment of this application.

The transceiver 1303 is configured to communicate with another communication apparatus.

For example, the communication apparatus 1300 is an application server, and the transceiver 1303 may be configured to communicate with a second network device or a fourth network device.

For another example, the communication apparatus 1300 is a first network device in a first network, and the transceiver 1303 may be configured to communicate with the third network device, the fourth network device, or the second network device.

For still another example, the communication apparatus 1300 is a second network device in the first network, and the transceiver 1303 may be configured to communicate with the application server or the first network device.

For still another example, the communication apparatus 1300 is a third network device in the first network, and the transceiver 1303 may be configured to communicate with the fourth network device or the first network device.

For still another example, the communication apparatus 1300 is a fourth network device in the first network, and the transceiver 1303 may be configured to communicate with the third network device, the first network device, or the application server.

Optionally, the transceiver 1303 may include a receiver and a transmitter (not separately shown in FIG. 13). The receiver is configured to implement a receiving function, and the transmitter is configured to implement a sending function.

Optionally, the transceiver 1303 may be integrated with the processor 1301, or may exist independently, and is coupled to the processor 1301 through the interface circuit (not shown in FIG. 13) of the communication apparatus 1300. This is not specifically limited in this embodiment of this application.

It is easy to understand that the structure of the communication apparatus 1300 shown in FIG. 13 does not constitute a limitation on the communication apparatus. An actual communication apparatus may include more or fewer components than those shown in the figure, combine some components, or have different component arrangements.

In addition, for technical effect of the communication apparatus 1300, refer to the technical effect of the method in the foregoing method embodiments. Details are not described herein again.

It should be understood that, the processor in embodiments of this application may be a central processing unit (central processing unit, CPU), or the processor may be another generalpurpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The generalpurpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than a limitative description, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Optionally, an embodiment of this application further provides a computer program product carrying computer instructions. When the computer instructions are run on a computer, the computer is caused to perform the method described in the foregoing embodiment.

Optionally, an embodiment of this application further provides a computer-readable storage medium. The computer-readable storage medium stores computer instructions. When the computer instructions are run on a computer, the computer is caused to perform the method described in the foregoing embodiment.

Optionally, an embodiment of this application further provides a chip, including a processing circuit and a transceiver circuit. The processing circuit and the transceiver circuit are configured to implement the method described in the foregoing embodiments. The processing circuit is configured to perform a processing action in a corresponding method, and the transceiver circuit is configured to perform a receiving/sending action in the corresponding method.

All or some of the foregoing embodiments may be implemented using software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a generalpurpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between associated objects, or may indicate an "and/or" relationship. A specific meaning depends on the context.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a communication device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first network device in a first network, wherein the first network is used for communication between an application server and a terminal device, and the method comprises:
receiving a first policy from a second network device in the first network, wherein the first policy indicates the first network to notify the application server in a case that the application server fails to transmit data to the terminal device through the first network; and
sending a first message to a third network device in the first network, wherein the first message indicates the third network device to notify the first network device or a fourth network device in the first network in a case that the third network device fails to transmit data to the terminal device, and the first message is generated according to the first policy.

2. The method according to claim 1, wherein the first policy comprises a data type; and
that the first policy indicates the first network to notify the application server in the case that the application server fails to transmit data to the terminal device through the first network comprises:
the first policy indicates the first network to notify the application server when the following case occurs: the application server fails to transmit, to the terminal device through the first network, data indicated by the data type.

3. The method according to claim 1, wherein the first policy comprises an importance condition; and
that the first policy indicates the first network to notify the application server in the case that the application server fails to transmit data to the terminal device through the first network comprises:
the first policy indicates the first network to notify the application server when the following case occurs: the application server fails to transmit, to the terminal device through the first network, data meeting the importance condition.

4. The method according to any one of claims 1 to 3, wherein the method further comprises:
receiving delay information from the second network device, wherein the delay information indicates a maximum delay between a client of the terminal device and the application server for acknowledging success or failure of the data transmission; and
sending retransmission duration or the delay information to the third network device, wherein the retransmission duration indicates duration for performing retransmission in the case that the third network device fails to transmit the data to the terminal device within a preset delay requirement, and the retransmission duration is determined by the first network device based on the delay information.

5. The method according to any one of claims 1 to 3, wherein when the first message indicates the third network device to notify the fourth network device in the case that the third network device fails to transmit the data to the terminal device, the method further comprises:
receiving delay information from the second network device, wherein the delay information indicates a maximum delay between a client of the terminal device and the application server for acknowledging success or failure of the data transmission; and
sending retransmission duration or the delay information to the fourth network device, wherein the retransmission duration indicates duration for performing retransmission in a case that the fourth network device fails to transmit data to the terminal device within a preset delay requirement, and the retransmission duration is determined by the first network device based on the delay information.

6. The method according to claim 4 or 5, wherein
the retransmission duration is determined based on a frame rate, a packet data unit set delay budget PSDB, and the delay information; or the retransmission duration is determined based on the frame rate, a packet data unit delay budget PDB, and the delay information.

7. The method according to any one of claims 1 to 6, wherein when the first message indicates the third network device to notify the fourth network device in the case that the third network device fails to transmit the data to the terminal device,
after receiving the first policy from the second network device in the first network, the method further comprises:
sending a second message to the fourth network device, wherein the second message indicates the fourth network device to notify, when the fourth network device receives a notification of transmission failure from the third network device, the application server that the data transmission to the terminal device through the first network fails, and the second message is generated according to the first policy.

8. The method according to any one of claims 1 to 7, wherein when the first message indicates the third network device to notify the fourth network device in the case that the third network device fails to transmit the data to the terminal device, after sending the first message to the third network device in the first network, the method further comprises:
receiving a third message from the fourth network device, wherein the third message indicates that transmission of first data to the terminal device through the first network fails; and
sending a fourth message to the second network device, wherein the fourth message indicates that the transmission of the first data to the terminal device through the first network fails.

9. The method according to any one of claims 1 to 4, wherein when the first message indicates the third network device to notify the first network device in the case that the third network device fails to transmit the data to the terminal device, after sending the first message to the third network device in the first network, the method further comprises:
sending a fourth message to the second network device when receiving a notification of transmission failure from the third network device, wherein the notification of transmission failure and the fourth message indicate that transmission of first data to the terminal device through the first network fails.

10. The method according to claim 8 or 9, wherein
at least one of the third message or the fourth message comprises a first identifier indicative of the first data.

11. The method according to claim 10, wherein the first identifier comprises at least one of the following:
a data packet sequence number corresponding to a network layer protocol;
a data packet sequence number corresponding to a transport protocol layer;
a data packet sequence number corresponding to an application protocol layer; or
a general packet radio service tunneling protocol sequence number GTP SN of a first interface, wherein the first interface is an interface between the fourth network device and the application server, and the fourth network device is a user plane network element.

12. The method according to any one of claims 1 to 11, wherein
the first network device is a session management network element;
the second network device is a policy control network element;
the third network device is an access network device; and
the fourth network device is a user plane network element.

13. A communication method, applied to a second network device in a first network, wherein the first network is used for communication between an application server and a terminal device, and the method comprises:
determining a first policy, wherein the first policy indicates the first network to notify the application server in a case that the application server fails to transmit data to the terminal device through the first network; and
sending the first policy to a first network device in the first network.

14. The method according to claim 13, wherein
the determining the first policy comprises:
receiving a request message from the application server, wherein the request message is used to request the first network to notify the application server in a case that the application server fails to transmit the data to the terminal device through the first network; and
determining the first policy based on the request message.

15. The method according to claim 13 or 14, wherein the method further comprises:
receiving delay information from the application server, wherein the delay information indicates a maximum delay between a client of the terminal device and the application server for acknowledging success or failure of the data transmission; and
sending the delay information or retransmission duration to the first network device, wherein the retransmission duration indicates duration for performing retransmission in a case that a third network device or a fourth network device fails to transmit data to the terminal device within a preset delay requirement, and the retransmission duration is determined by the second network device based on the delay information.

16. A communication method, applied to a fourth network device in a first network, wherein the first network is used for communication between an application server and a terminal device, and the method comprises:
receiving a second message from a first network device in the first network, wherein the second message indicates the fourth network device to notify, in a case that the fourth network device receives a notification of transmission failure from a third network device in the first network, the application server that transmission of first data to the terminal device through the first network fails; and
notifying the application server based on the second message in the case of receiving the notification of transmission failure.

17. The method according to claim 16, wherein before notifying the application server based on the second message, the method further comprises:
receiving retransmission duration or delay information from the first network device, wherein
the delay information indicates a maximum delay between a client of the terminal device and the application server for acknowledging success or failure of data transmission, and the delay information is used by the fourth network device to determine the retransmission duration; and
the retransmission duration indicates duration for performing retransmission in a case that the fourth network device fails to transmit data to the terminal device within a preset delay requirement.

18. The method according to claim 17, wherein after receiving the retransmission duration or the delay information from the first network device, notifying the application server based on the second message in the case of receiving the notification of transmission failure comprises:
starting a retransmission timer in a case of receiving the notification of transmission failure for the first time;
retransmitting the first data during running of the retransmission timer; and
notifying the application server based on the second message in a case that the notification of transmission failure is received again and the running of the retransmission timer expires, wherein running duration of the retransmission timer is the retransmission duration.

19. The method according to claim 17 or 18, wherein
the retransmission duration is determined based on a frame rate, a packet data unit set delay budget PSDB, and the delay information; or the retransmission duration is determined based on the frame rate, a packet data unit delay budget PDB, and the delay information.

20. The method according to any one of claims 16 to 19, wherein the notifying the application server based on the second message in the case of receiving the notification of transmission failure comprises:
sending a fifth message to the application server based on the second message in the case of receiving the notification of transmission failure, wherein the fifth message indicates that the transmission of the first data to the terminal device through the first network fails; or
sending a notification message to the application server based on the second message through the first network device and a second network device in the first network in the case of receiving the notification of transmission failure, wherein the notification message indicates that the transmission of the first data to the terminal device through the first network fails.

21. A communication method, applied to a third network device in a first network, wherein the first network is used for communication between an application server and a terminal device, and the method comprises:
receiving a first message from a first network device in the first network, wherein the first message indicates the third network device to notify a fourth network device or the first network device in the first network in a case that the application server fails to transmit data to the terminal device through the first network; and
sending, in a case that transmission of first data to the terminal device fails, a notification of transmission failure to a network device indicated by the first message, wherein the notification of transmission failure indicates that the transmission of the first data to the terminal device through the first network fails.

22. The method according to claim 21, wherein before sending the notification of transmission failure to the network device indicated by the first message, the method further comprises:
receiving retransmission duration or delay information from the first network device, wherein
the delay information indicates a maximum delay between a client of the terminal device and the application server for acknowledging success or failure of the data transmission, and the delay information is used by the third network device to determine the retransmission duration; and
the retransmission duration indicates duration for performing retransmission in a case that the third network device fails to transmit data to the terminal device within a preset delay requirement.

23. The method according to claim 21, wherein after receiving the retransmission duration or the delay information from the first network device, sending, in a case that transmission of first data to the terminal device fails, the notification of transmission failure to the network device indicated by the first message comprises:
starting a retransmission timer in the case that the transmission of the first data to the terminal device fails for the first time;
retransmitting the first data during running of the retransmission timer; and
sending, in a case that the transmission of the first data to the terminal device fails again and the running of the retransmission timer expires, the notification of transmission failure to the network device indicated by the first message.

24. A network device, wherein the network device is a first network device, and comprises a processor and a memory, wherein the processor is coupled to the memory, the memory stores program instructions, and when the program instructions stored in the memory are executed by the processor, the first network device is caused to perform the method according to any one of claims 1 to 12.

25. A network device, wherein the network device is a second network device, and comprises a processor and a memory, wherein the processor is coupled to the memory, the memory stores program instructions, and when the program instructions stored in the memory are executed by the processor, the second network device is caused to perform the method according to any one of claims 13 to 15.

26. A network device, wherein the network device is a third network device, and comprises a processor and a memory, wherein the processor is coupled to the memory, the memory stores program instructions, and when the program instructions stored in the memory are executed by the processor, the third network device is caused to perform the method according to any one of claims 21 to 23.

27. A network device, wherein the network device is a fourth network device, and comprises a processor and a memory, wherein the processor is coupled to the memory, the memory stores program instructions, and when the program instructions stored in the memory are executed by the processor, the fourth network device is caused to perform the method according to any one of claims 16 to 20.

28. A chip, comprising a processor and a memory coupled to the processor, wherein the memory stores a computer program, the chip is located in a first network device, and when the processor executes the computer program, the first network device is caused to perform the method according to any one of claims 1 to 12.

29. A chip, comprising a processor and a memory coupled to the processor, wherein the memory stores a computer program, the chip is located in a second network device, and when the processor executes the computer program, the second network device is caused to perform the method according to any one of claims 13 to 15.

30. A chip, comprising a processor and a memory coupled to the processor, wherein the memory stores a computer program, the chip is located in a third network device, and when the processor executes the computer program, the third network device is caused to perform the method according to any one of claims 21 to 23.

31. A chip, comprising a processor and a memory coupled to the processor, wherein the memory stores a computer program, the chip is located in a fourth network device, and when the processor executes the computer program, the fourth network device is caused to perform the method according to any one of claims 16 to 20.

32. A computer-readable storage medium, storing a computer program or instructions, wherein when the computer program or the instructions are executed on a first network device, the first network device is caused to perform the method according to any one of claims 1 to 12.

33. A computer-readable storage medium, storing a computer program or instructions, wherein when the computer program or the instructions are executed on a second network device, the second network device is caused to perform the method according to any one of claims 13 to 15.

34. A computer-readable storage medium, storing a computer program or instructions, wherein when the computer program or the instructions are executed on a third network device, the third network device is caused to perform the method according to any one of claims 21 to 23.

35. A computer-readable storage medium, storing a computer program or instructions, wherein when the computer program or the instructions are executed on a fourth network device, the fourth network device is caused to perform the method according to any one of claims 16 to 20.
